**Europäisches Patentamt**

**European Patent Office**

**Office européen des brevets**

(11) Numéro de publication : **0 365 431 B1**

(12)

# FASCICULE DE BREVET EUROPEEN

(45) Date de publication du fascicule du brevet :
**14.12.94 Bulletin 94/50**

(51) Int. Cl.$^5$ : **H04L 5/02**

(21) Numéro de dépôt : **89402894.3**

(22) Date de dépôt : **20.10.89**

(54) **Emetteur, procédé d'émission et récepteur.**

(30) Priorité : **21.10.88 FR 8813832**
　　　　　**21.10.88 FR 8813833**

(43) Date de publication de la demande :
**25.04.90 Bulletin 90/17**

(45) Mention de la délivrance du brevet :
**14.12.94 Bulletin 94/50**

(84) Etats contractants désignés :
**ES GR**

(56) Documents cités :
**CH-A- 620 558**
**US-A- 3 456 202**
**EBU REVIEW TECHNICAL, no. 224, août 1987, pages 168-190, Bruxelles, BE; M. ALARD et al.: "Principles of modulation and channel coding for digital broadcasting for mobile receivers"**
**IEEE TRANSACTIONS ON COMMUNICA-TIONS, vol. COM-34, no. 6, juin 1986, pages 587-592, IEEE, New York, US; B. HIROSAKI et al.: "Advanced groupband data modem using orthogonally multiplexed QAM technique"**
**IEEE TRANSACTIONS ON COMMUNICA-TIONS, vol. COM-20, no. 3, juin 1972, pages 435-438, New York, US; U. TIMOR: "Equivalence of time-multiplexed and fre-quency-multiplexed signals in digital commu-nications"**

(73) Titulaire : **THOMSON-CSF**
**173, Boulevard Haussmann**
**F-75008 Paris (FR)**

(72) Inventeur : **Fouche, Yvon**
**THOMSON-CSF**
**SCPI**
**Cédex 67**
**F-92045 Paris la Défense (FR)**
Inventeur : **Elleaume, Philippe**
**THOMSON-CSF**
**SCPI**
**Cédex 67**
**F-92045 Paris la Défense (FR)**
Inventeur : **de Couasnon, Tristan**
**THOMSON-CSF**
**SCPI**
**Cédex 67**
**F-92045 Paris la Défense (FR)**
Inventeur : **Travert, Serge**
**THOMSON-CSF**
**SCPI**
**Cédex 67**
**F-92045 Paris la Défense (FR)**
Inventeur : **Monnier, Raoul**
**THOMSON-CSF**
**SCPI**
**Cédex 67**
**F-92045 Paris la Défense (FR)**
Inventeur : **Hergault, Stephane**
**THOMSON-CSF**
**SCPI**
**Cédex 67**
**F-92045 Paris la Défense (FR)**

(74) Mandataire : **Grynwald, Albert et al**
**THOMSON-CSF,**
**SCPI,**
**B.P. 329,**
**50, rue Jean-Pierre Timbaud**
**F-92402 Courbevoie Cédex (FR)**

EP 0 365 431 B1

## Description

L'invention se rapporte à un émetteur ainsi qu'à un procédé d'émission particulièrement performants. L'invention se rapporte aussi principalement à un récepteur.

Il est connu de transmettre des informations en utilisant des ondes modulées, comme par exemple des ondes électromagnétiques. Il est connu d'essayer d'augmenter les débits d'informations transmis. Toutefois, l'augmentation du débit passe le plus souvent par une augmentation de la bande de fréquences utilisées. Or, dans le cas des transmissions guidées, on est limité par la bande passante du canal, par exemple un câble coaxial ou une fibre optique, tandis que dans les transmissions aériennes, on ne dispose plus de suffisamment de fréquences pour satisfaire tous les besoins.

D'autre part, le document FR-A-2 601 210 décrit un procédé de transmission utilisant des symboles A (f, t). Chaque symbole correspond à une fréquence et un temps d'émission donné. Le temps d'émission n'étant pas fixé, le dispositif n'utilise pas de moyen de synchronisation fine, ce qui limite l'efficacité spectrale à approximativement 0,7 bit/(Hz.s). D'autre part, le document FR-A-2 604 316 décrit l'utilisation de dispositifs de calcul de la Transformée de Fourier discrète pour la démodulation du signal. Ce document suggère d'autre part l'utilisation d'une période de garde entre les symboles. Toutefois, la non orthogonalité des canaux utilisés limite l'efficacité spectrale dans le meilleur des cas à 1 bit/(Hz.s).

D'autre part, dans le document EBU Review Technical, n° 224, Août 1987, pages 168-190, on décrit un procédé d'émission utilisant simultanément une pluralité de fréquences orthogonales. Il s'agit d'un procédé de type OFDM utilisant quatre couples amplitude/phase sur chaque fréquence.

Avec le dispositif selon la présente invention, il est possible de dépasser dans des conditions analogues 5 bits/(Hz.s).

La présente invention concerne une amélioration des moyens et de procédés d'émissions décrits dans les brevets FR-A-2 604 843, FR-A-2 604 793, FR-A-2 604 842, FR-A-2 604 809, FR-A-2 610 462, FR-A-2 609 224 et surtout au procédé décrit dans l'article EBU Review Technical N° 224.

Dans les dispositifs de type connu, on a souvent essayé d'augmenter le débit d'informations en diminuant les temps de transmission alloués à chaque unité d'informations, (ou en augmentant le nombre de symboles possibles). Ainsi, on générait un spectre élargi, dont il faut, à l'émission filtrer les lobes secondaires, ce qui crée une distorsion du signal. Pour un signal carré d'une durée $\tau$ on obtient un spectre possédant de nombres lobes secondaires ; le lobe principal a une largeur de $2/\tau$. Nous appellerons dans la suite de ce brevet auto-distorsion cette distorsion du signal.

Le dispositif selon la présente invention présente l'originalité de réduire ou d'éliminer l'auto-distorsion du signal en utilisant des intervalles d'émission longs pour les éléments d'informations (souvent appelés symboles) à transmettre. Pour obtenir un débit élevé, on transmet simultanément une pluralité d'éléments d'information en utilisant des canaux orthogonaux. Un élément d'information est, par exemple, un mot numérique de 6 bits. Avantageusement, on transmet un élément d'information par canal de transmission. L'orthogonalité à la réception des canaux de transmission permet la séparation des informations appartenant à divers canaux. L'orthogonalisation à la réception des divers canaux provient d'un choix de plusieurs fréquences d'émissions espacées régulièrement de $k/T$, k est un entier naturel et T la durée de l'intervalle utile d'émission. Ce type d'émission suppose à la réception un échantillonnage synchrone pour obtenir la séparation des canaux.

L'invention a principalement pour objet un procédé d'émission d'ondes modulées à haute efficacité spectrale utilisant simultanément une pluralité de fréquences orthogonales dans lequel on émet des symboles pendant une durée $T + \Delta T$, deux fréquences d'émission étant distantes de $1/T$, T étant l'intervalle utile d'émission et $\Delta T$ étant l'intervalle de transition, absorbant les non-stationarités dues à l'arrivée des différents échos, dans lequel durant chaque intervalle d'émission de durée $T + \Delta T$, on émet un couple (amplitude, phase) ou (partie réelle, partie imaginaire) sur chaque fréquence, le couple (amplitude, phase) ou (partie réelle, partie imaginaire) étant équivalent de façon bi-univoque à l'information à transmettre, caractérisé en ce que le nombre de couples possible est supérieur à 4, en ce que les symboles émis sont constitués périodiquement par des signaux de référence permettant à la réception d'égaliser le canal de transmission et en ce que l'on émet des signaux de synchronisation permettant à la réception le traitement du signal pendant les intervalles utiles d'émission de durée T de façon à retrouver l'orthogonalité des canaux correspondant aux diverses fréquences.

L'invention a aussi pour objet un émetteur pour la mise en oeuvre du procédé, caractérisé par le fait qu'il comporte un dispositif de modulation permettant d'émettre durant un intervalle utile d'émission de durée $T + \Delta T$, pour chaque fréquence utilisée, ces fréquences étant choisies parmi une pluralité de fréquences orthogonales, deux fréquences étant distantes de $1/T$, soit un symbole choisi parmi un nombre de couples amplitudes, phase important, soit un signal de référence permettant d'assurer l'égalisation du canal de transmission.

L'invention a aussi pour objet un récepteur pour la réception des ondes émises à haute efficacité spectrale avec le procédé comportant des moyens de transposition et d'échantillonnage synchrones avec le signal, caractérisé par le fait qu'il comporte des moyens de démodulation d'une émission d'ondes modulées utilisant des symboles émis pendant une durée T + ΔT sur une pluralité de fréquence orthogonales, deux fréquences d'émission étant distantes de 1/T, T étant l'intervalle utile d'émission et ΔT étant l'intervalle de transition et qu'il comporte un dispositif d'asservissement assurant la synchronisation du récepteur avec le signal reçu utilisant l'intervalle de transition ΔT et en ce qu'il comporte des moyens de test utilisant les signaux de référence en vue de réaliser une égalisation du canal.

L'invention sera mieux comprise au moyen de la description ci-après et des figures annexées données comme des exemples non limitatifs parmi lesquelles :

- la figure 1 est un schéma illustrant le phénomène l'élargissement de spectre ;
- la figure 2 est un schéma illustrant la transmission d'une fréquence porteuse ;
- la figure 3 est un schéma expliquant le principe de fonctionnement du dispositif selon la présente invention ;
- la figure 4 est un schéma expliquant le principe de fonctionnement du dispositif selon la présente invention ;
- la figure 5 est un schéma expliquant le principe de fonctionnement du dispositif selon la présente invention ;
- la figure 6 comporte des chroncgrammes illustrant l'enchaînement des périodes ou intervalles d'émission ;
- la figure 7 est un schéma d'un exemple de codage susceptible d'être mis en oeuvre dans le dispositif selon la présente invention ;
- la figure 8 est un schéma général d'un émetteur selon la présente invention ;
- la figure 9 est un schéma d'un premier exemple de réalisation d'un émetteur selon la présente invention ;
- la figure 10 est un schéma d'un second exemple de réalisation d'un émetteur selon la présente invention ;
- la figure 11 est un schéma d'un troisième exemple de réalisation d'un émetteur selon la présente invention ;
- la figure 12 est un schéma d'un exemple de réalisation d'un détail des émetteurs des figures 9, 10 ou 11 ;
- la figure 13 est un schéma d'un détail de réalisation des émetteurs de la figure 11 ;
- la figure 14 est un schéma d'un premier exemple de réalisation d'un détail des émetteurs selon la présente invention ;
- la figure 15 est un schéma d'un second exemple de réalisation d'un détail des émetteurs selon la présente invention ;
- la figure 16 est un schéma d'un premier exemple de réalisation d'un détail du dispositif illustré sur la figure 13 ;
- la figure 17 est un schéma d'un second exemple de réalisation du dispositif illustré sur la figure 13 ;
- la figure 18 est une courbe illustrant le débit d'information obtenu en fonction du nombre d'état de codage pour une durée de l'intervalle utile d'émission T et un nombre de canaux utilisés donnés ;
- la figure 19 est une courbe illustrant un exemple de réalisation analogique de la synchronisation émetteur-récepteur.
- la figure 20 est un schéma d'un troisième exemple de réalisation d'un détail des émetteurs selon la présente invention ;
- la figure 21 est un schéma d'un exemple de réalisation d'un récepteur selon la présente invention ;
- la figure 22 est un schéma d'un exemple de réalisation d'un récepteur de télévision selon la présente invention ;
- la figure 23 est un schéma illustrant un exemple d'égalisation susceptible d'être mis en oeuvre dans le dispositif selon la présente invention ;
- la figure 24 est un schéma d'une architecture susceptible d'être mise en oeuvre dans le dispositif selon la présente invention ;
- la figure 25 est un schéma d'un exemple de réalisation d'un détail du récepteur selon la présente invention ;
- la figure 26 est une courbe illustrant un exemple de réalisation analogique de la synchronisation émetteur-récepteur ;
- la figure 27 est un exemple de réalisation d'un dispositif susceptible d'être mis en oeuvre dans le dispositif selon la présente invention ;
- la figure 28 est une courbe illustrant le débit d'information obtenu en fonction du nombre d'état de codage pour une durée de l'intervalle utile d'émission T et le nombre de canaux utilisé donnés.

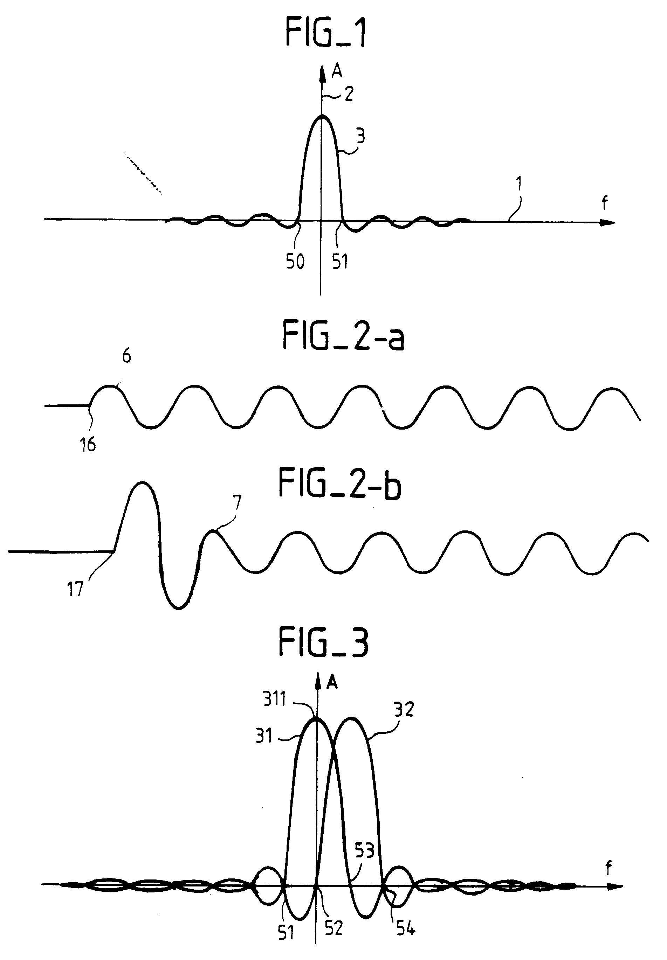

Sur les figures 1 à 28 on a utilisé les mêmes références pour désigner les mêmes éléments.

Sur la figure 1, on peut voir une courbe 3 représentant, à la réception, l'amplitude A 2 du spectre d'une onde d'amplitude constante émise durant un intervalle de temps limité de durée T. La courbe 3 a une forme en sin x/x.

En fréquence, en plus d'un lobe principal, on transmet des lobes secondaires qui vont en diminuant au fur et à mesure qu'on s'éloigne de la fréquence centrale $f_0$. L'amplitude A passe par zéro en deux points symétriques par rapport à la fréquence $f_0$ référencés 50 et 51. Les passages par amplitude nulle sont régulièrement répartis, distants de 1/T.

L'élargissement du spectre dépend principalement de la durée des impulsions émises. Les émissions courtes provoquent un élargissement en fréquences plus important. Dans les dispositifs de type connu, l'élargissement du spectre avec une bande passante limitée allouée aux transmissions allonge la durée de la réponse impulsionnelle du signal créant ainsi des interférences entre les impulsions (appelées "interférences intersymboles"). La quantité d'informations séparables était ainsi limitée.

Sur la figure 2a, on peut voir une courbe 6 correspondant à l'émission à partir d'un instant 16 d'une fréquence sinusoïdale pure. Le signal 6 peut, par exemple correspondre à une porteuse. La courbe 6 représente l'amplitude en fonction du temps.

Sur la figure 2b, on peut voir une courbe 7 représentant l'amplitude en fonction du temps de l'onde 6 reçue par un récepteur. Dans la mesure où le récepteur est fixe par rapport à l'émetteur, l'onde reçue 7 a la même fréquence que l'onde émise 6. Toutefois, l'amplitude et la phase ont varié. Sur la figure 2b, le début de la réception porte la référence 17. L'instant 17 est postérieur à l'instant 16, la différence correspondant au temps de propagation des ondes entre l'émetteur et le récepteur. A partir d'un instant 18, le signal 7 a la même allure que le signal 6. Entre l'instant 17 et l'instant 18 nous assistons à l'établissement du signal pendant lequel on observe diverses perturbations. Les perturbations dans l'intervalle de temps entre l'instant 17 et l'instant 18 proviennent principalement des distorsions apportées par les équipements d'émission et de réception, des perturbations dues aux échos multiples, ainsi que de la limitation de la bande passante de l'émetteur. Dans la mesure où la fréquence du signal 6 et du signal 7 est conservée, il est possible, en effectuant un étalonnage de l'amplitude et de la phase de retrouver à la réception l'information émise. Certains changements de fréquences comme par exemple le changement de fréquence dû à l'effet Doppler, par suite par exemple du déplacement du récepteur par rapport à l'émetteur, pourront être compensés par un étalonnage adéquat.

Pour effectuer l'étalonnage on considère par exemple que tout ce qui se passe entre l'émetteur et le récepteur est un filtre ayant une réponse en fréquence stable sur des durées bien supérieures à la durée T des symboles. En émettant des signaux de type connu, il est possible de déterminer la réponse en fréquence du filtre. Ainsi, en appliquant la réponse en fréquence inverse on arrive à regénérer à la réception, le signal émis.

Sur la figure 3, on peut voir un schéma illustrant le principe de fonctionnement du dispositif selon la présente invention. Sur la figure 3, on peut voir une première courbe 31 et une seconde courbe 32 centrées sur des fréquences respectivement $f_0$ et $f_0 + 1/T$, T étant la durée d un intervalle utile d'émission. L'amplitude A de la courbe 31 passe par zéro aux points 51 et 53.

L'amplitude A de la courbe 32 passe par zéro aux points 52,54.

Le point 52 correspond à l'amplitude maximale de la courbe 31 et à l'amplitude nulle de la courbe 32. Un point 311 du spectre à la fréquence $f_0$ n'est pas perturbé par le signal correspondant à la courbe 32.

De même, le point 53 correspond à l'amplitude maximale de la courbe 32 et à l'amplitude nulle de la courbe 31. Au point 53, à la fréquence $f_0 + 1/T$ le signal appartient uniquement à la courbe 32. En échantilllonnant le spectre aux fréquences $f_0$ et $f_0 + 1/T$, on arrive à complètement séparer les fréquences correspondant aux courbes 31 et 32. On pourra aisément utiliser des états d'amplitude, de phase ou d'amplitude/phase indépendants sur chacune des fréquences $f_0$ et $f_0 + 1/T$. Les deux codages étant parfaitement indépendants et séparables à la réception, il est possible de répartir le débit total d'informations entre plusieurs canaux.

Dans les dispositifs de type connu, pour augmenter le débit d'informations transmises on diminuait la durée des impulsions et/ou le temps consacré à la transmission de chaque information élémentaire (ou en augmentant le nombre de symboles possibles).

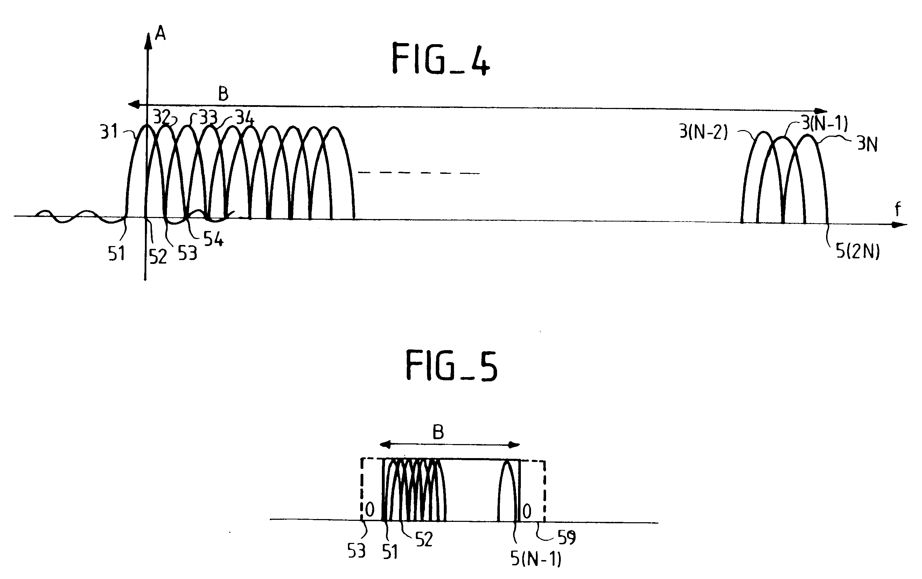

Par contre, dans le dispositif selon la présente invention pour un débit d'informations donné, dans la mesure où il est possible de répartir le débit à transmettre entre plusieurs canaux, on peut se permettre d'augmenter la durée T des impulsions et/ou des intervalles utiles d'émissions correspondants à une information élémentaire. Le débit total étant obtenu en effectuant la somme des débits élémentaires correspondants à chaque fréquence. En augmentant la durée T des intervalles utiles d'émissions on diminue l'élargissement du spectre et l'auto-distorsion du signal. Il est ainsi possible comme illustré sur la figure 4 d'utiliser un nombre important de porteuses 31 à 3N. L'utilisation de N fréquences 31, 3N permet un très bon remplissage de la bande passante B. Comme dans le cas de la figure 3, des courbes successives sont séparées, en fréquence de 1/T. Ainsi le maximum de spectre de chaque canal correspond au passage par l'amplitude nulle des spectres de tous les autres canaux.

4

Sur la figure 4, une courbe 3i passe par le maximum à une fréquence correspondante au point 5 (i + 1) et par l'amplitude nulle aux fréquences correspondantes aux points 5j j ≠ i+1. Pour la clarté de la figure 4, seuls les lobes secondaires de la courbe 31 ont été représentés.

Chaque canal de transmission correspondant à une fréquence de porteuse différente, véhicule une information indépendante des autres canaux. Le débit total est égal à la somme des débits de N canaux.

L'augmentation du nombre de canaux, sans diminuer le débit augmente la durée T des intervalles utiles d'émission.

Par contre l'augmentation du nombre de canaux nécessite à l'émission et à la réception un matériel plus important ou plus performant.

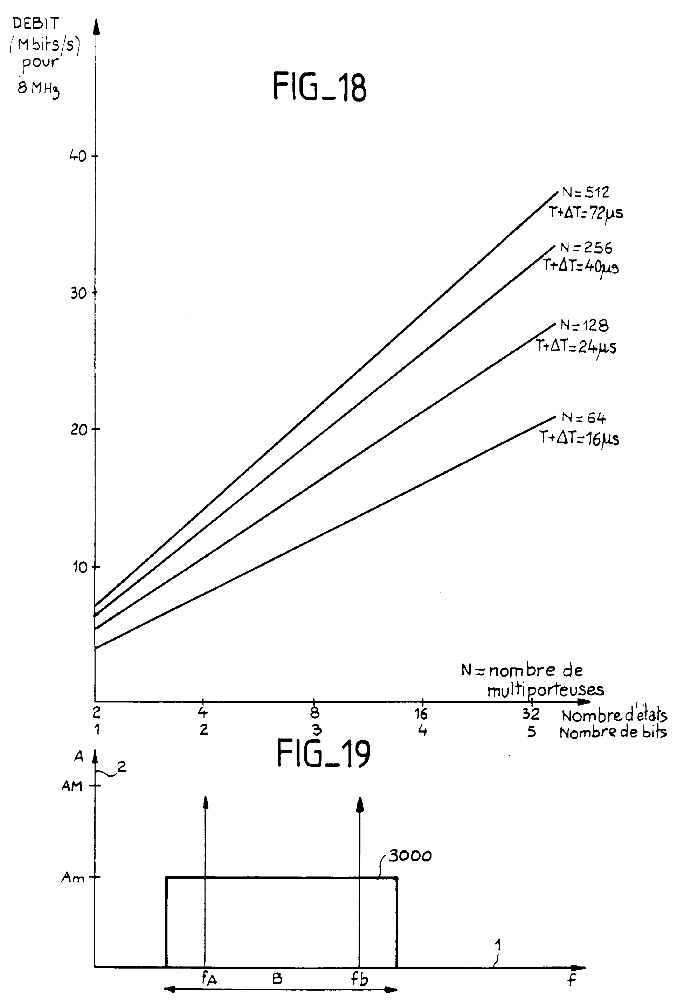

Pour un fonctionnement correct du dispositif selon la présente invention, il est impératif que la partie utile du signal, à la réception, soit stable. Pour cela, à la réception, on élimine les intervalles de temps de durée $\Delta T$ pendant lesquels le signal risque de ne pas être stationnaire. Ce temps correspond principalement aux réponses impulsionnelles de l'émetteur et du récepteur et aux trajets multiples. Dans la suite de ce Brevet, on appelle intervalle de transition de durée $\Delta T$ l'intervalle pendant lequel le signal risque de ne pas être stationnaire, intervalle utile de durée T, la partie stationnaire du signal exploité par le récepteur. Le signal est avantageusement émis pendant des intervalles d'émission de durée T + $\Delta T$. Ainsi, les spectres de chaque canal bien que répartis de façon uniforme espacés de 1/T ont une largeur du lobe principal égale à 2/(T + $\Delta T$). A la réception on n'utilise que l'intervalle utile de durée T ce qui permet de reconstituer le spectre de la figure 4. Un exemple non limitatif de débit en M bits/s en fonction du nombre d'états possibles (c'est-à-dire de symboles différents susceptibles d'être transmis) est représenté sur la figure 18.

En plus en abscisse on a indiqué le nombre de bits du codage. Par exemple un codage sur 4 bits donne $2^4 = 16$ états différents. Les courbes sont données pour un intervalle de transition identique de durée $\Delta T = 8$ $\mu s$.

Une première courbe indique les débits obtenus pour N = 64 et T + $\Delta T$ 16 $\mu s$.

Une deuxième courbe indique les débits obtenus pour N = 128 et T + $\Delta T$ = 24 $\mu s$.

Une troisième courbe indique les débits obtenus pour N = 256 et T + $\Delta T$ = 40 $\mu s$.

Une quatrième courbe indique les débits obtenus pour N = 512 et T + $\Delta T$= 72 $\mu s$.

A intervalle de transition constant, le fait d'augmenter la partie utile du signal conduit à un phénomène de saturation limitant le débit, non représenté sur la figure 18. Les courbes de la figure 18 correspondent à une bande passante B de 8 MHz.

Selon notamment la bande passante disponible, l'application et les conditions de propagation, l'homme du métier choisira le compromis idéal entre le nombre de canaux N et l'intervalle utile d'émission T.

Le débit peut être augmenté dans une certaine limite, en utilisant un intervalle de transition de durée $\Delta T$ très faible par rapport à la durée T de l'intervalle utile d'émission.

Il est avantageux d'utiliser la Transformée de Fourier inverse rapide (FFT$^{-1}$ en terminologie anglo-saxonne) pour effectuer la modulation des canaux à l'émission et la Transformée de Fourier rapide (FFT en terminologie anglo-saxonne) pour effectuer la démodulation à la réception. L'utilisation d'algorithme de Transformée de Fourier rapide impose d'effectuer les calculs sur un nombre d'échantillons égal à une puissance de deux. Au cours de transmissions de télévison on utilise par exemple 256,512,1024 ou 2048 canaux. Toutefois, il n'est pas nécessaire que chaque canal transmette une information.

A la réception, pour chaque intervalle utile d'émission T on mesure avantageusement la phase et l'amplitude correspondant à chacune des fréquences 31 à 3N. On utilise un échantillonnage synchrone pour extraire l'information du signal.

L'amplitude représentant l'information est constante sur toute la durée de l'intervalle d'émission de durée T ou T + $\Delta T$ et la phase représentant l'information correspond au déphasage par rapport à une référence de phase.

Pour obtenir un débit d'informations important il est nécessaire de pouvoir distinguer des amplitudes et des phases proches et donc de disposer d'une référence d'amplitude et de phase pour chaque canal. Cette référence de l'amplitude et de la phase est avantageusement donnée par des signaux de référence émis périodiquement par l'émetteur vers le récepteur. La fréquence de répétition de signaux de référence dépend de la stabilité des conditions de propagation et des oscillateurs locaux.

Dans une première variante de réalisation du dispositif selon la présente invention, on émet périodiquement des signaux de référence d'amplitude et de phase sur toutes les fréquences 31 à 3N d'un intervalle de temps de durée T ou T + $\Delta T$. Toutefois, il est nécessaire de noter que l'émission fréquente de signaux d'étalonnage réduit le débit d'informations utiles transmises.

Dans une variante avantageuse du dispositif selon la présente invention on n'émet que quelques signaux d'étalonnage avantageusement répartis régulièrement parmi les fréquences 31 à 3 N, les coefficients des autres fréquences étant déterminés par le calcul, par exemple par interpolation.

D'une façon plus générale, il est possible de distribuer les signaux d'étalonnage dans le temps et/ou sur des canaux différents.

Il est par exemple possible d'émettre de façon périodique des signaux de test, chaque émission se faisant sur des canaux différents. On effectue, par exemple une permutation circulaire des canaux affectés aux tests. On déduit pour tous les canaux par exemple par interpolation dans le temps et/ou sur les fréquences la réponse impulsionnelle du milieu de transmission. On déduit ainsi la matrice des corrections en amplitude et en phase à appliquer à chaque canal.

Il est primordial de compenser par des étalonnages les variations de la réponse impulsionnelle du milieu de transmission, par exemple par suite d'une variation (même locale) des conditions atmosphériques.

On détermine la réponse impulsionnelle du milieu, par exemple en calculant la Transformée de Fourier des corrections à apporter.

Dans un exemple de réalisation un canal sur 8 servait à l'étalonnage de amplitude A et de la phase de tous les canaux 31 à 3N. Dans un tel type de dispositif il est possible, soit d'effectuer l'étalonnage à chaque intervalle utile d'émission de durée T, soit comme dans le cas d'une réalisation décrite précédemment de consacrer uniquement certains intervalles d'émission à l'étalonnage. La synchronisation est maintenue par l'utilisation d'une base de temps stable.

Le nombre de canaux et/ou des périodes consacrées à l'étalonnage dépend de l'erreur qu'on veut pouvoir corriger ainsi que des perturbations qui sont susceptibles d'affecter la transmission d'informations. Les étalonnages devront par exemple être plus fréquents, pour compenser le déplacement des fréquences par effet Doppler dans le cas de déplacements d'un émetteur par rapport à l'autre par exemple dans le cas de radiotéléphones ou de communications entre aéronefs.

Les premiers et les derniers canaux risquent d'être perturbés notamment par les filtres de l'émetteur et du récepteur. Avantageusement comme illustré sur la figure 5, on n'utilise pas le premier et le dernier canal pour la transmission d'informations. Par exemple on n'émet rien sur le premier et le dernier canal ou on répète l'émission du deuxième canal sur le premier et de l'avant dernier sur le dernier.

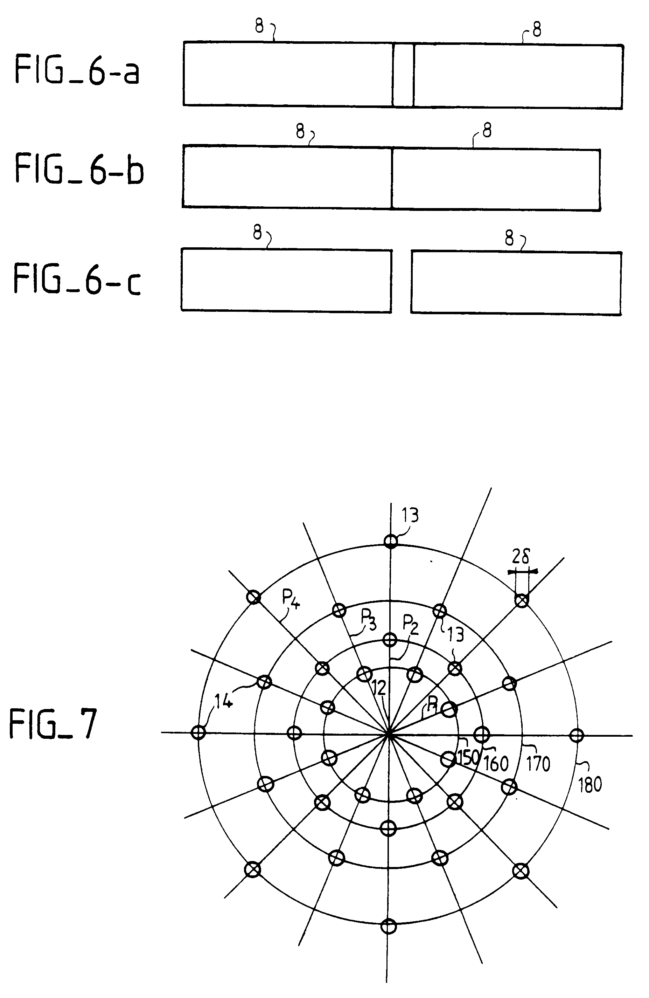

Sur la figure 6, on peut voir divers exemples de chronogrammes d'enchaînement des périodes d'émission 8 successives.

Sur la figure 6a, on peut voir des intervalles utiles d'émission 8. Entre les intervalles utiles d'émission 8 se trouvent des intervalles de transition 81 ne présentant pas de diminution de puissance émise. Dans les intervalles de transition 81 on émet, par exemple le signal émis à la fin de l'intervalle utile d'émission correspondant. Le fait de ne pas diminuer la puissance d'émission permet d'utiliser au mieux les amplificateurs des émetteurs.

Sur la figure 6b, on peut voir des intervalles d'émission utiles 8 successifs qui ne sont pas séparés par des intervalles de transition. Ce cas correspond au débit d'informations maximal. Il présente l'inconvénient de la faible sécurité de transmission en cas de perturbations. Cette variante sera par exemple utilisée pour les transmissions par câbles.

Sur la figure 6c, on peut voir une succession d'intervalles utiles d'émission 8 séparés par des intervalles de transition 81 pendant lesquels on arrête l'émission d'ondes modulées. On économise ainsi de l'énergie.

Le choix du type et de la durée d'intervalles de transition 81 dépend du matériel utilisé, des conditions d'émission et de réception espérées. Par exemple, si on s'attend à des échos multiples importants, on aura tout intérêt à utiliser des intervalles de transition plus longs. La longueur de l'intervalle de transition 81 sera par exemple déterminée à partir de pires conditions dans lesquelles on veut être sûrs d'obtenir une réception correcte. Par exemple, si l'on veut pouvoir s'affranchir des échos multiples provenant d'une distance maximale de 600 mètres on utilisera un intervalle de transition 81 correspondant au temps de propagation de cet écho, par exemple électromagnétique et éventuellement du temps correspondant à l'amortissement de la réponse impulsionnelle de cet écho, par exemple 4 µs.

Sur la figure 7, on peut voir un exemple de codage d'informations susceptible d'être mis en oeuvre dans un dispositif selon la présente invention. Ce type de codage a été décrit dans les documents FR-A- 2 604 483, FR-A- 2 604 794, FR-A- 2 604 793, FR-A- 2 604 842, FR-A- 2 604 809, FR-A- 2 610 462, FR-A- 2 609 224. Dans ce type de codage à chaque mot numérique est associée une amplitude et une phase dans le plan complexe. Le couple (amplitude, phase) est équivalent à la partie réelle et imaginaire du signal. Dans l'exemple illustré les couples (amplitude, phase) 14 se répartissent régulièrement sur des cercles concentriques 150,160,170 et 180. Dans l'exemple illustré sur la figure 7, on dispose de 32 valeurs différentes ce qui correspond à un codage sur cinq bits. Il est bien entendu que les codages sur un nombre de bits différent comme par exemple 2,3,4 ou 6 ou plus ne sortent pas du cadre de la présente invention. La taille des disques 13 centrés sur les points 13 correspondant au même mot numérique permet de tolérer une certaine imprécision. Plus le diamètre des disques 13 est important et plus le taux d'erreurs sera faible mais moins on pourra avoir de valeurs différentes. Dans l'exemple illustré sur la figure 7, les cercles 150,160,170,180 ont des diamètres $\rho 1$, $\rho 2$, $\rho 3$ et $\rho 4$

égal respectivement à $\sqrt{2/2}$, 1, $\sqrt{2}$ et 2, la puissance d'un émetteur étant normalisée à 1. Dans l'exemple de la figure 7, pour diminuer les risques d'erreurs à la réception on éloigne au maximum les disques 13. Ainsi sur chaque cercle suivant, les points 14 sont placés sur la bissectrice de points 14 du cercle précédent. Il est bien entendu que la disposition de la figure 7 n'est donnée qu'à titre d'exemple non limitatif. Par exemple la répartition des points 14 sur un rectangle ou une spirale, par exemple logarithmique ou d'Archimède ne sort pas du cadre de la présente invention. De même tout autre type de codage peut être utilisé, le type de codage dépend du débit et de la nature de l'information à transmettre. Le codage peut être analogique ou numérique selon l'application désirée.

Dans le dispositif selon la présente invention, il est possible d'effectuer l'analyse de la réponse impulsionnelle du milieu de transmission. Selon l'application il est possible d'utiliser une analyse en temps réel ou une analyse en différé.

L'analyse permet d'adapter la norme de transmission aux conditions locales, par exemple sur un réseau local d'ordinateur ou de téléphonie ou sur des faisceaux hertziens.

Par exemple, sur un réseau local il est possible d'effectuer l'analyse à chaque reconfiguration du réseau. Pour éliminer les réflexions dans les câbles on peut placer des parties de l'intervalle de transition (de durée totale $\Delta T$) au moment où ces réflexions sont les plus importantes.

Sur les faisceaux hertziens on utilise par exemple un calculateur pour effectuer en temps réel l'analyse de la réponse impulsionnelle du milieu et pour adapter les transmissions de façon à obtenir le débit maximal permis par les perturbations du milieu. Par exemple le calculateur diminue quand cela est possible, sans dépasser le taux d'erreur admis, la durée $\Delta T$ de l'intervalle de transition. Dans une variante de réalisation, le calculateur effectue le choix d'un moyen de transmission parmi une pluralité de disponibles.

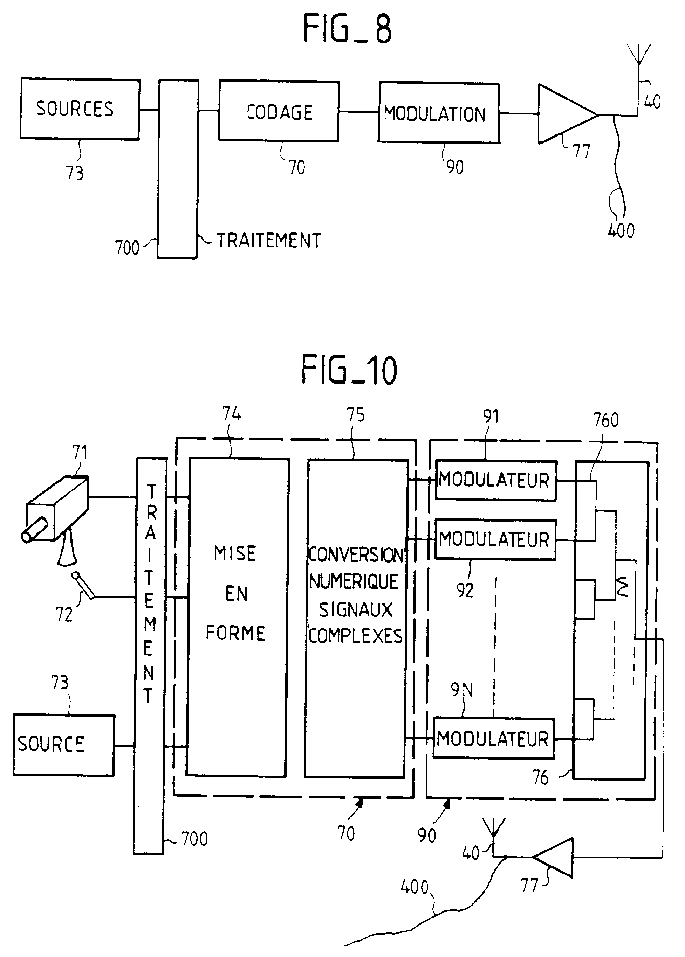

Sur la figure 8, on peut voir un schéma général d'un exemple de réalisation d'un émetteur selon la présente invention. L'émetteur comporte un dispositif de codage 70 et un dispositif de modulation 90.

Le dispositif de codage 70 reçoit des informations à émettre à partir de sources d'informations 73. Les sources d'informations peuvent être par exemple une caméra de télévision, un microphone, un magnétoscope, un magnétophone, une régie de télévision, un ordinateur, un central téléphonique, un dispositif d'acquisition de données, un radiotéléphone, un téléphone, une source d'information associée à un radar, un sonar et/ou un capteur. Avantageusement, l'émetteur selon la présente invention comporte entre les sources d'informations 73 et le dispositif de codage 70 un dispositif 700 de traitement d'informations permettant d'effectuer les modifications désirées. Par exemple, le dispositif de traitement d'information comporte un dispositif de type connu de réduction de débit d'information, par exemple par élimination d'informations redondantes. Avantageusement, le dispositif 700 comporte un dispositif d'embrouillage du signal de type connu qui fournit un signal comportant l'information à transmettre mais dont l'intégration dans le temps correspond à un bruit blanc. Dans la mesure où d'une part le dispositif selon la présente invention permet d'émettre des débits importants d'informations, et d'autre part il est possible d'émettre soit simultanément soit en multiplexage temporel des informations de types différents, il est possible de connecter simultanément plusieurs sources 73 au dispositif de codage 70. Le dispositif de codage 70 effectue le codage soit pour obtenir des performances les plus élevées soit pour respecter une norme de transmission établie. L'information traitée est transmise du dispositif de codage 70 au dispositif de modulation 90. Le dispositif de modulation 90 permet la modulation simultanée d'une pluralité de porteuses comme illustré par exemple sur la figure 4. Les signaux modulés par le dispositif de modulation 90 sont amplifiés par un amplificateur 77, émis, par exemple par une antenne 40 ou injectés dans un câble 400. Si cela s'avère nécessaire on effectue avant l'émission la modulation d'une porteuse haute fréquence.

Dans la mesure où l'on émet N canaux indépendants il est possible d'effectuer l'amplification séparée de divers canaux.

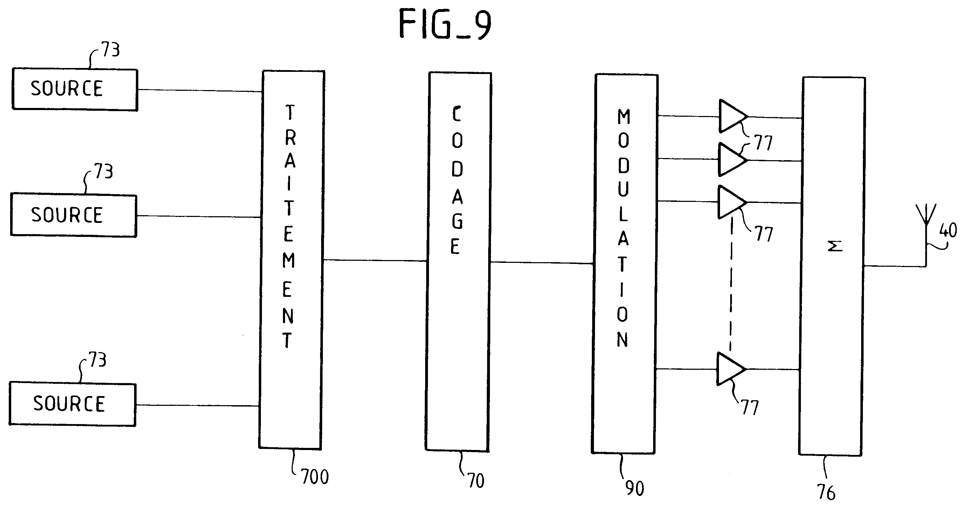

Sur la figure 9, on peut voir un exemple de réalisation d'émetteurs selon la présente invention comportant une pluralité d'amplificateurs 77 disposée entre le dispositif de modulation 90 et le dispositif de sommation 76. Avantageusement, chaque amplificateur 77 correspond à un canal. Toutefois, il est possible, sans sortir du cadre dela présente invention d'affecter à chaque canal plusieurs amplificateurs 77 ou, au contraire d'effectuer une sommation partielle de plusieurs canaux en sortie du dispositif de modulation 90 pour les appliquer à un amplificateur unique.

L'utilisation d'une pluralité d'amplificateurs 77 est particulièrement adaptée aux amplificateurs transistorisés. En effet il est connu d'utiliser la somme des puissances fournies par une pluralité de modules transistorisés pour obtenir la puissance désirée.

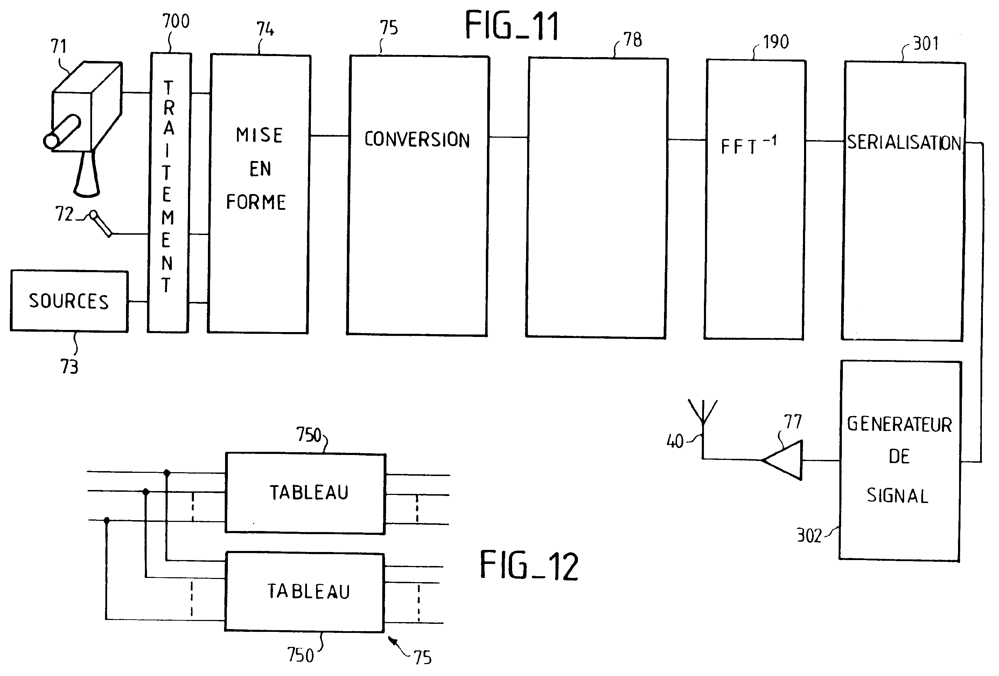

Sur la figure 10, on peut voir un premier exemple de réalisation de l'émetteur selon la présente invention. Dans l'exemple illustré sur la figure 10, le signal à émettre est fourni par une caméra de télévision 71, un microphone 72 et/ou d'autres sources 73. Avantageusement, les sources 71, 72 et/ou 73 sont reliées au dispositif de traitement d'information 700. Le dispositif de codage 70 comporte un circuit de mise en forme relié à un dispositif de conversion numérique/signaux complexe. Le dispositif de modulation 90 comporte un ensemble de N modulateurs référencés 91 à 9N connectés à un dispositif de sommation 76. Le dispositif de sommation du signal 76 comporte, par exemple, un arbre de distribution symétrique 760. Le dispositif de modulation 90 est relié à un dispositif d'amplification 77 relié lui-même à une antenne d'émission 40 et/ou à un câble de transport 400. Le dispositif d'amplification 77 peut comporter des dispositifs d'élévation en fréquence nécessaires pour répondre aux normes de transmission.

Le dispositif de mise en forme 74 effectue la mise sous la forme désirée des signaux issus des sources 71 à 73. Par exemple le dispositif de mise en forme 74 effectue le multiplexage des diverses sources et fournit en série des nombres. Le circuit de mise en forme 74 comporte des circuits d'échantillonnage, des circuits convertisseurs analogiques-numériques, et/ou des multiplexeurs. Dans le cas de dispositifs numériques, la puissance de calcul du dispositif de mise en forme 74 dépend principalement du débit d'informations désiré. Par exemple une émission de télévision numérique en haute définition avec un son stéréophonique haute fidélité en plusieurs langues ainsi que des informations numériques exigera un débit beaucoup plus important que, par exemple, une transmission radiophonique stéréophonique, ou à fortiori, une transmission de radio téléphone.

Avantageusement, on transmet des couples (amplitude, phase) par exemple, comme ceux illustrés sur la figure 7 ou des couples (partie réelle, partie imaginaire) du signal. Le dispositif de conversion numérique signaux complexes 75 génère à partir des mots numériques fournis par le dispositif de mise en forme 74 des couples (amplitude, phase) ou (partie réelle, partie imaginaire) du signal et les répartit entre les divers modulateurs 91 à 9N. Le dispositif de sommation 76 fournit à l'entrée du dispositif d'amplification 77 un signal composite comprenant des fréquences 31 à 3N nécessaires à la transmission. Les fréquences 31 à 3N sont des fréquences de modulation. Ainsi, il est possible, soit au niveau du dispositif de modulation 90 soit au niveau du dispositif d'amplification 70 d'élever la fréquence d'émission. Le signal composite porté sur une porteuse, par exemple, haute fréquence est émis par l'antenne 40 ou est injecté dans le câble 400.

Sur la figure 11, on peut voir un second exemple de réalisation de l'émetteur selon la présente invention. Le dispositif de la figure 11 comporte entre la sortie du dispositif de conversion 75 et l'entrée de l'amplificateur 77, connectés en série un dispositif de réarrangement du signal 78 un dispositif de calcul de la Transformée de Fourier inverse 190, un dispositif de sérialisation du signal 301 et un dispositif de génération de signal sur porteuse 302. La modulation du signal composite à émettre peut être obtenue en calculant une Transformée de Fourier inverse.

Avantageusement, on utilise un calculateur 190 susceptible de calculer une Transformée de Fourier inverse discrète.

Avantageusement, on utilise un circuit de calcul de Transformée de Fourier rapide inverse (FFT$^{-1}$ en terminologie anglo-saxonne). L'utilisation d'algorithmes de la Transformée de Fourier rapide inverse exige que le nombre N de canaux soit une puissance de 2. Toutefois, il n'est pas nécessaire que tous les canaux véhiculent de l'information.

Démonstration de la possibilité d'utilisation des algorithmes de la Transformée de Fourier inverse discrète pour effectuer la modulation du signal :

Soit N fréquences $f_0$, $f_0 + 1/T$, $f_0 + 2/T$, $f_0 + 3/T$,..., $f_0 + k/T$,..., $f_0 + (N-1)/T$ modulées en amplitude et/ou en phase pendant un intervalle de temps de durée T. Les N porteurs modulés sont :

$$S_k(t) = A_k \exp(j(2\pi(f_0 + k/T)t + \varphi_k))$$

k étant un entier compris entre 0 et N-1

$A_k$ étant l'amplitude de la porteuse d'ordre k,

t étant le temps

$\varphi_k$ étant la phase de la porteuse d'ordre k.

Supposons que la référence de la valeur de phase transmise est prise au début des intervalles de temps T.

Les signaux $S_k(t)$ et $S_{k'}(t)$ sont indépendants et complètement séparables s'ils remplissent la condition d'orthogonalité :

$$\forall k \neq k' \quad \int_0^T S_k(t)\, S_{k'}(t)\, dt = 0.$$

$$\int_0^T Sk\ (t)\ Sk'\ (t)\ dt\ =\ \int_o^T Ak\ Ak'\ \exp\ j(2\P\ (f_0\ +\ k/T)\ t+\varphi\ k)$$

$$\exp\ j(2\P\ (f_0\ +\ k'/T)\ t+\ \varphi\ k')\ dt$$

$$=\ Ak\ Ak'\quad \int_o^T \exp\ j(2\P\ (f_0\ +\ (k\ +\ k')/T)\ t\ +\ \varphi\ k\ +\ \varphi\ k')\quad dt$$

$$=\ Ak\ Ak'\ (\exp\ j\ (4\P\ f_0\ T\ +\ \varphi\ k\ +\ \varphi\ k')\quad -\ \exp\ j\ (\ \varphi\ k\ +\ \varphi\ k')$$

La condition d'orthogonalité est donc satisfaite si $4\P f_0 T = 2l\P$, I étant un entier, ce qui est équivalent à
$$f_0 = l/2T.$$
Prenons une fréquence $f_0 = - (N/2 - 1)/T = (2-N)/2T$.
Echantillonnons les signaux $Sk\ (t)$ à la fréquence d'échantillonnage $f_e = N/T = B$, B étant la bande passante.
$$Sk\ (n)\ =\ Ak\ \exp\ j\ (2\P((2 - N)/2T + k/T)\ n\ T/N\ +\ \varphi\ k)$$
$$=\ Ak\ \exp\ j\ (2\P(n(2 - N)/2N + nk/N)\ +\ \varphi\ k)$$
Le signal modulé X s'écrit

$$X(n)\ =\ \sum_{k=0}^{N-1}\ Sk\ (n)$$

$$=\ \sum_{k=0}^{N-1}\ Ak\ \exp\ j\ (2\P(n(2-N)/2N + nk/N)\ +\ \varphi\ k)$$

$$=\ \sum_{k=0}^{N-2}\ Ak\ \exp\ j\ (2\P(n(2-N)\ +\ 2k)/2N\ +\ \varphi\ k)\ +\ \sum_{k=\frac{N}{2}-1}^{N-1}\ Ak\ \exp\ j$$

$$(2\P(n(2-N+2k)/2N)\ +\ \varphi\ k)$$

Posons k' = k+(N/2)+1 pour k compris entre 0 et (N/2)-2 c'est-à-dire que k' est compris entre (N/2)+1 et N-1 et k' = k-(N/2)+1 pour k compris entre N/2-1 et N-1 ce qui correspond à k' compris entre 0 et N/2.

$$X(n)\ =\ \sum_{k'=\frac{N}{2}+1}^{N-1}\ (Ak'-(N/2)-1)\ \exp\ j\ (2\P n(2-N+2k'-N-2)/2N$$

$$+\ \varphi k'-N/2-1)$$

$$+\ \sum_{k'=0}^{N/2}\ (Ak'+(N/2)-1)\ \exp\ j\ (2\P n\ (2-N+2k'+N-2)/2N+$$

$$\varphi k'+(N/2)-1)$$

$$X(n) = \sum_{k'=\frac{U}{2}+1}^{U-1} (A_{k'-(N/2)-1}) \exp j \ (2\pi(n(k'-N)/N) + \varphi_{k'-(N/2)-1})$$

$$+ \sum_{k'=0}^{N/2} (A_{k'+(N/2)-1}) \exp j \ (2\pi(nk'/N) + \varphi_{k'+(N/2)-1})$$

$$X(n) \sum_{k'=0}^{N-1} B_{k'} \exp (j \ \theta_{k'}) \exp j(2\pi nk'/N)$$

avec

$$B_{k'} = A_{k'+(N/2)-1}$$
$$\theta_{k'} = \theta_{k'+(N/2)-1} \qquad \text{pour } k' = 0, \ldots, N/2$$

$$B_{k'} = A_{k'-(N/2)-1}$$
$$\theta_{k'} = \varphi_{k'-(N/2)-1} \qquad \text{pour } k' = N/2 + 1, \ldots, N-1$$

{ X(n) } est la Transformée de Fourier discrète inverse {(TFD$^{-1}$) de A((N/2)-1) exp (j φ (N/2)-1),..., AN-1 exp (j φ (N-1)),...,

Ao exp (j φ 0),..., A ((N/2)-2) exp (j φ (N/2)-2)

De même à la réception il est possible d'effectuer la démodulation du signal en effectuant une Transformée de Fourier discrète (TFD).

L'invention n'est pas limitée à l'utilisation de la Transformée de Fourier inverse pour effectuer la modulation du signal. D'autres algorithmes transformant un espace de fréquence en l'espace des temps peuvent être mis en oeuvre.

Le dispositif de sérialisation 301 fournit, avantageusement, une succession de valeurs numériques au dispositif de génération du signal 302. Avantageusement, le dispositif de sérialisation 301 répète certaines valeurs numériques de façon à générer l'intervalle de transition. Avantageusement, on réémet pendant les intervalles de transition de durée T la fin de l'intervalle utile de durée T suivant ledit intervalle de transition.

Dans une variante de réalisation correspondant aux signaux illustrés sur la figure 6c le dispositif de sérialisation 301 fournit des "O" pendant les durées ΔT des intervalles de transition.

Le dispositif de sérialisation comporte des moyens de mémorisation et des multiplexeurs.

Il est bien entendu que d'autres variantes de génération du signal comme, par exemple la génération de signal homodyne utilisant par exemple une pluralité de dispositifs de calcul de la Transformée de Fourier ne sort pas du cadre de la présente invention.

Sur la figure 12, on peut voir un exemple de réalisation du dispositif de conversion 75 des mots numériques en signaux complexes. Le dispositif 75 comporte deux tableaux de conversion 750 stockés dans des dispositifs de mémorisation permanente. On utilise par exemple des mémoires permanentes de type mémoire morte, mémoire morte programmable, mémoire morte programmable effaçable, mémoire morte programmable effaçable électriquement ou mémoire vive sauvegardée (ROM, PROM, EPROM, EEPROM ou RAM en terminologie anglo-saxonne). Les mots numériques à convertir correspondent aux adresses dans les tableaux 750, la valeur de l'amplitude ou la partie réelle du signal étant stockée à cette adresse dans un premier tableau 750 la valeur de la phase ou la partie imaginaire du signal étant stockée dans le second tableau.

Il est bien entendu que les deux tableaux ne correspondent pas nécessairement à deux boîtiers de mémoires. Ainsi il est possible d'utiliser un seul boîtier mémoire ayant une capacité suffisante ou d'utiliser plus de deux boîtiers mémoires selon la résolution désirée et la capacité des circuits mémoire utilisés.

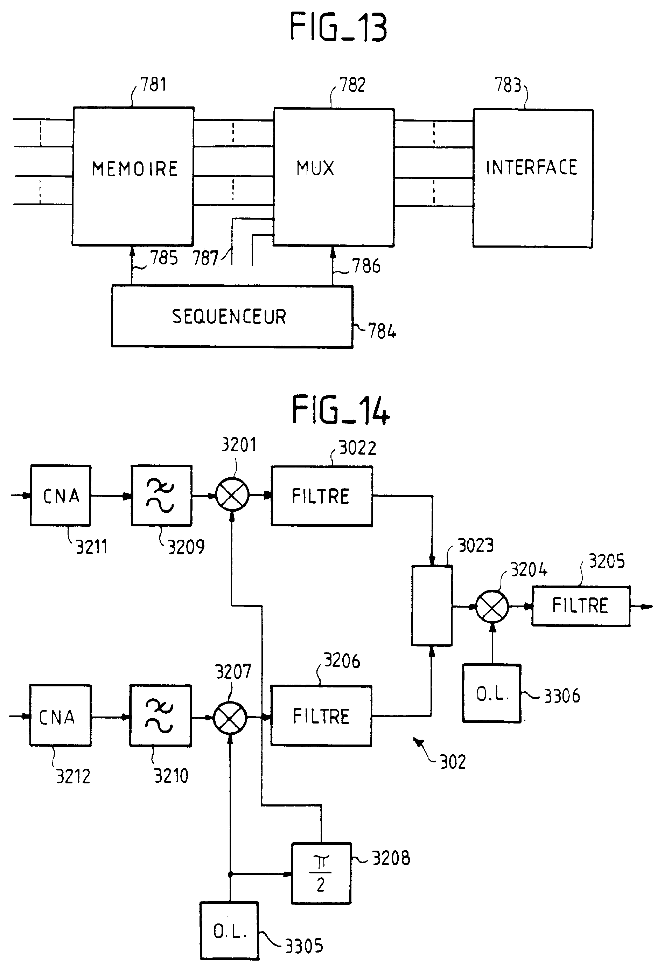

Sur la figure 13, on peut voir un dispositif de réarrangement 78. Le dispositif de réarrangement 78 comporte un dispositif de mémorisation 781, un multiplexeur 782 et un séquenceur 784. Le dispositif de mémorisation 781 est connecté au multiplexeur 782. Le séquenceur 784 est connecté par une ligne de commande 785 au dispositif de mémorisation 781 et par une ligne de commande 786 au multiplexeur 782. Le dispositif de réarrangement 78 permet de mettre les données à traiter dans un format compatible avec le dispositif de calcul 190. Le réarrangement des données dépend notamment du modèle par exemple des circuits de calcul de la Transformée de Fourier rapide utilisés. Le séquenceur 784 permet de réarranger l'ordre de mots numériques et/ou des bits à intérieur des mots numériques à traiter par circuit de calcul non représenté sur la figure 13. Le séquenceur 784 fournit les adresses au dispositif de mémorisation 781 par l'intermédiaire de la ligne 785 ainsi que des signaux de contrôle. Le séquenceur 784 fournit au multiplexeur 782 les signaux de contrôle par l'intermédiaire de la ligne 786 permettant la commutation entre diverses positions du multiplexeur. Le multiplexeur 782 est par exemple un multiplexeur à trois positions permettant de choisir entre deux bancs de mémoires et un générateur de zéro 787. Le générateur de zéro 787 par exemple permet de générer des zéros nécessaires à la génération du signal par la Transformée de Fourier Inverse.

Les zéros nécessaires à la génération de la Transformée de Fourier inverse sont stockés dans un dispositif de mémorisation 781. Ils sont émis soit à partir des connexions spéciales du dispositif de mémorisation 781 connecté au multiplexeur 782, soit par l'adressage exécuté par le séquenceur 784 du dispositif de mémorisation 781.

Si cela est nécessaire le dispositif 78 comporte un interface 783 permettant l'adaptation des signaux de sortie aux signaux d'entrée du circuit de calcul par exemple de la Transformée de Fourier discrète.

Sur la figure 16, on peut voir un exemple de réalisation du dispositif de mémorisation 781 de la figure 13. Dans l'exemple illustré sur la figure 16 le dispositif de mémorisation 781 comporte quatre bancs de mémoires 7811,7812,7813 et 7814. Chaque banc reçoit par exemple du séquenceur 784 une commande de lecture ou d'écriture L/E. Simultanément deux bancs par exemple 7811 et 7812 sont en lecture et deux bancs par exemple 7813 et 7814 sont en phase d'écriture. Ainsi, les signaux arrivant sont susceptibles d'être écrits dans un banc dans l'ordre qui sera nécessaire à leur relecture. La relecture simultanée du second banc de mémoire permet de fournir les données numériques nécessaires au circuit de calcul.

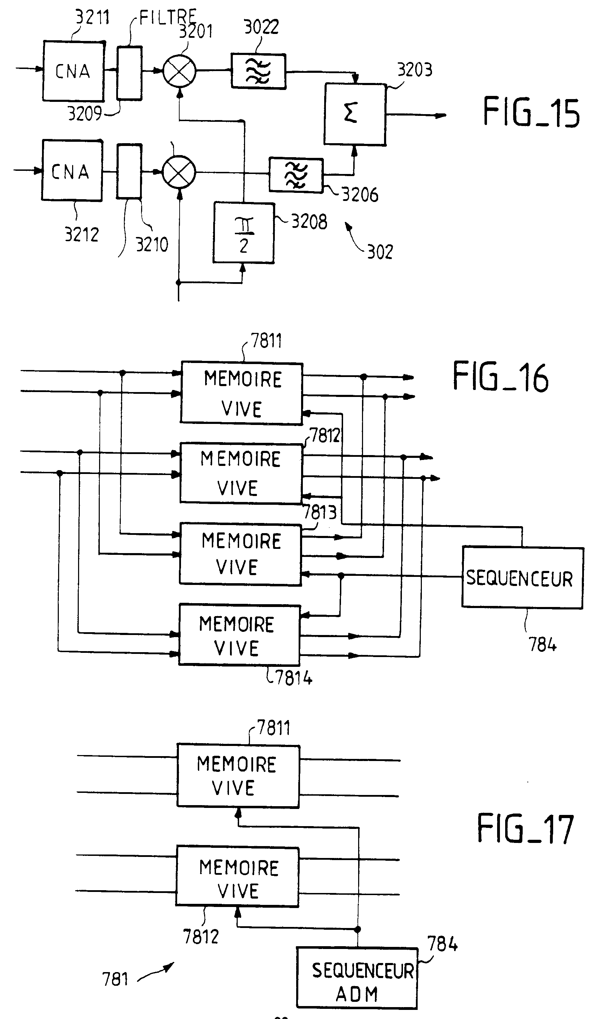

Sur la figure 17, on peut voir un second exemple de réalisation du dispositif de mémorisation 781. Le dispositif de mémorisation 781 de la figure 17 comporte uniquement deux bancs de mémoires 7811 et 7812. Le séquenceur 784 est dans ce cas un séquenceur à accès direct mémoire (DMA en terminologie anglo-saxonne). Ainsi les deux bancs de mémoires permettent de façon simultanée la lecture et l'écriture des données.

Dans le cas des figures 16 et 17 on fournit simultanément des données en quadrature de phase I et Q composante réelle et imaginaire.

Dans le dispositif selon la présente invention, il est possible d'utiliser la modulation du signal sur diverses fréquences. Par exemple dans le cas d'utilisations d'ondes électromagnétiques hautes fréquences il est possible de moduler le signal directement sur la porteuse d'émission, c'est-à-dire à la fréquence d'émission, comme illustré sur la figure 15, d'effectuer la modulation sur des fréquences intermédiaires comme illustré sur la figure 14 ou d'effectuer la modulation sur la fréquence de base.

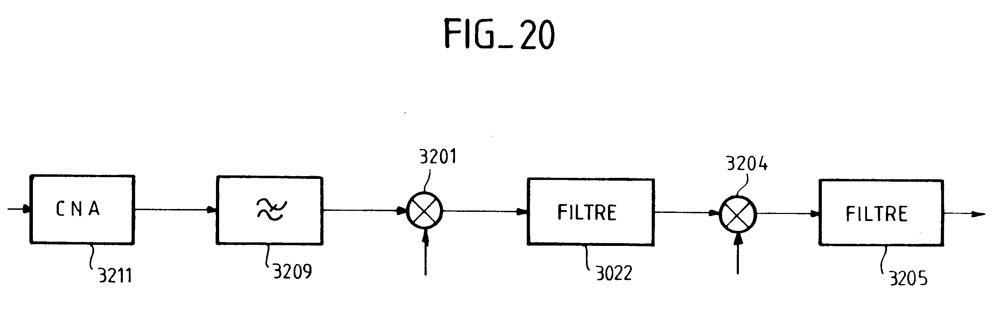

La modulation sur la bande de base est effectuée nécessairement en I et Q. Par contre, en fréquence intermédiaire ou sur la porteuse d'émission on peut effectuer la modulation à partir de signaux réels comme illustré sur la figure 20.

Le dispositif de la figure 20 comporte un convertisseur numérique-analogique 3211, un filtre passe-bas 3209, un mélangeur 3201, un filtre 3022, un mélangeur 3204 et un filtre 3205 connectés en série. Les secondes entrées des mélangeurs 3201 et 3204 sont reliées à des oscillateurs locaux non représentés sur la figure.

Sur la figure 14, on peut voir un second exemple de réalisation d'un dispositif 302 de génération du signal à émettre.

Le dispositif 302 comporte un premier mélangeur 3201 et un second mélangeur 3207 reliés à un dispositif de sommation 3023. La sortie du dispositif de sommation 3023 est reliée à une première entrée d'un troisième mélangeur 3204.

La seconde entrée du mélangeur 3207 est reliée à la sortie d'un oscillateur local 3305 générant la fréquence intermédiaire. La seconde entrée du mélangeur 3201 est reliée à la sortie de l'oscillateur local 3305 par l'intermédiaire d'un dispositif 3208 induisant un déphasage de $\pi/2$. Ainsi, on effectue l'élévation en fréquences des composantes I et Q en quadrature de phase, le signal étant reconstitué par le dispositif de sommation 3023.

La seconde entrée du mélangeur 3204 est reliée à un oscillateur local 3306 dont la fréquence d'oscillation est plus élevée que celle de l'oscillateur local 3305.

Avantageusement, les deux oscillateurs 3305 et 3306 sont synchronisés par une même base de temps non représentée. Les oscillateurs locaux 3305 et 3304 sont suffisamment stables pour permettre un étalonnage fiable à la réception.

Avantageusement, la base de temps est synchronisée avec le dispositif d'échantillonnage du signal.

EP 0 365 431 B1

Dans une variante de réalisation le dispositif 302 est un dispositif numérique.

Dans la variante de réalisation illustrée sur la figure 14 le dispositif 302 est un dispositif analogique ainsi, il comporte à l'entrée des convertisseurs numériques-analogiques 3211 et 3212. Les convertisseurs 3211 et 3212 sont connectés aux premières entrées du mélangeur respectivement 3201,3207. Entre la sortie des convertisseurs numériques-analogiques 3211 et 3212 et les entrées des mélangeurs 3201,3207 on place des filtres passe-bas respectivement 3209,3210. Les filtres 3209 et 3210 sont destinés à éliminer les composantes haute fréquence générés par les convertisseurs analogiques-numériques 3211 et 3212.

Il est nécessaire de disposer à la sortie des mélangeurs 3201,3207 et 3204 des filtres respectivement 3022,3206 et 3205 destinés à sélectionner la partie désirée du spectre présent à la sortie des mélangeurs.

Sur la figure 15, on peut voir une variante de réalisation du dispositif 302 comportant un seul étage d'élévation de fréquences. Le dispositif 302 de la figure 15 comporte un premier mélangeur 3201 et un second mélangeur 3207. Les sorties des mélangeurs 3201 et 3207 sont reliées aux entrées d'un dispositif de sommation 3203 par l'intermédiaire de filtres passe bande 3022 et 3206. Dans l'exemple analogique illustré sur la figure 15 la première entrée des mélangeurs 3201 et 3207 sont reliées aux sorties des convertisseurs numériques-analogiques 3211 et 3212 par l'intermédiaire des filtres 3209 et 3210.

L'émetteur selon la présente invention envoie des signaux de codage permettant à la réception la synchronisation précise d'une base de temps du récepteur avec une base du temps de l'émetteur. Ainsi il est possible d'avoir une bonne résolution temporelle et/ou de phase.

Dans un exemple de réalisation illustré sur la figure 19 on utilise une synchronisation analogique.

Dans l'exemple illustré sur la figure 19 on émet un ensemble 3000 de signaux modulés sur N canaux, le spectre est sensiblement rectangulaire ayant une largeur en fréquence f 1 égale à B, la bande passante, et une hauteur Am correspondant à l'amplitude A 2 moyenne du signal à l'intérieur de la bande B. On émet deux fréquences $f_A$ et $f_B$ avec une amplitude AM nettement supérieure à Am. Par exemple AM est supérieur de 12db à Am. Ainsi à la réception, en connaissant les fréquences $f_A$ et $f_B$ on va pouvoir séparer $f_A$ et $f_B$. Par la connaissance des fréquences $f_A$ et $f_B$ d'une part et de leur différence à la réception d'autre part, on obtient une référence de fréquence d'où on peut tirer une référence de temps. A la réception la différence $f_A$-$f_B$ est obtenue, par exemple en faisant battre les fréquences $f_A$ et $f_B$ dans un mélangeur.

Dans un exemple de réalisation du dispositif selon la présente invention B est égal à 8 MHz et $f_A$ est distant de $f_B$ de 5 MHz.

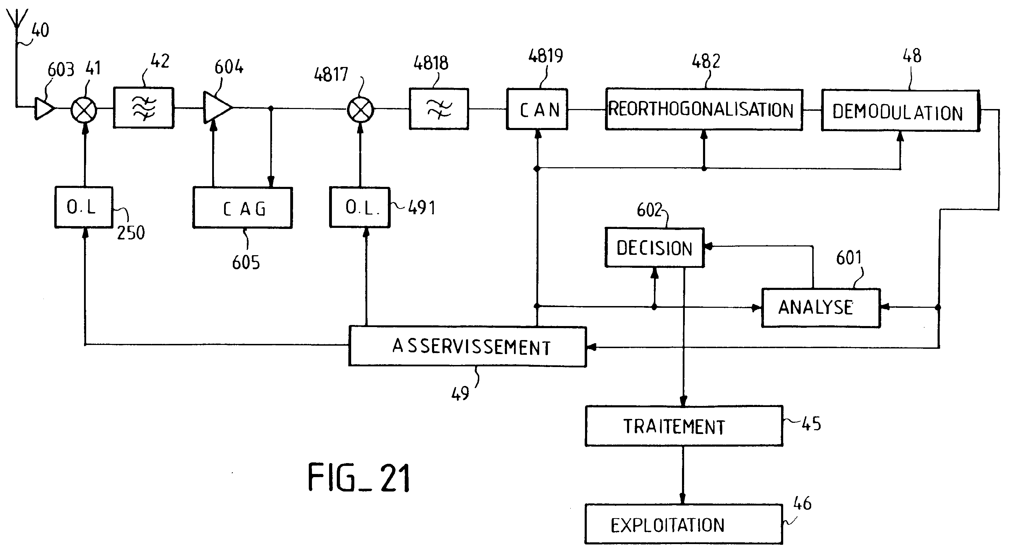

Sur la figure 21, on peut voir un schéma d'un exemple de réalisation d'un récepteur sur la présente invention. L'exemple de réalisation illustré sur la figure 21 comporte une antenne de réception 40, un amplificateur 603, un mélangeur 41, un filtre passe-bande 42, un amplificateur à gain variable 604, un mélangeur 4817, un filtre passe-bas 4818, un convertisseur analogiquenumérique 4819, un dispositif de réorthogonalisation 482, un dispositif de démodulation 48, un oscillateur local 250, un dispositif de contrôle automatique de gain 605, un oscillateur local 491, un dispositif d'asservissement 49, un circuit d'analyse 601, un circuit de décision 602, un dispositif de traitement 45, un dispositif d'exploitation 46.

L'antenne 40 est connectée à l'entrée de l'amplificateur 603. La sortie de l'amplificateur 603 est connectée à une première entrée du mélangeur 41. La sortie du mélangeur 41 est connectée à l'entrée du filtre passe-bande 42. La sortie du filtre passe-bande 42 est connectée à l'entrée de l'amplificateur 604. La sortie de l'amplificateur 604 est connectée d'une part à une première entrée du mélangeur 4817, et d'autre part, à l'entrée du circuit de contrôle automatique de gain 605. La sortie du contrôle automatique de gains 605 est connectée à une entrée de commande de gain de l'amplificateur 604. La sortie du mélangeur 4817 est connectée à l'entrée du filtre passe-bas 4818. La sortie du filtre passe-bas 4818 est connectée à l'entrée du convertisseur analogique numérique 4819. La sortie du convertisseur analogique numérique 4819 est connectée à l'entrée du dispositif de réorthogonalisation 482. La sortie du dispositif de réorthogonalisation 482 est connectée à l'entrée du dispositif de démodulation 48. La sortie du dispositif de démodulation 48 est connectée d'une part, à l'entrée du circuit d'analyse 601, et d'autre part, à l'entrée du dispositif d'asservissement 49. La sortie du circuit d'analyse 601 est connectée à l'entrée du dispositif de décision 602. La sortie du dispositif de décision 602 est connectée à l'entrée du dispositif de traitement de information 45. La sortie du dispositif de traitement de information 45 est connectée à l'entrée du dispositif d'exploitation 46. Une première sortie du dispositif d'asservissement 49 est reliée au convertisseur analogique numérique 4819, au dispositif de réorthogonalisation 482, au dispositif de démodulation 48, au circuit d'analyse 601 et au dispositif de décision 602. Une seconde sortie du dispositif d'asservissement 49 est reliée à l'oscillateur local 491. Une troisième sortie du dispositif d'asservissement 49 est reliée à l'oscillateur local 250.

L'antenne 40 reçoit le signal haute fréquence en provenance de l'émetteur.

L'amplificateur 603 amplifie le signal capté par l'antenne 40. Par des battements avec un signal haute fréquence fourni par l'oscillateur local 250, le mélangeur 41 abaisse la fréquence du signal reçu.

Le signal est filtré par un filtre 42. Le filtre 42 permet d'éliminer les signaux étrangers aux signaux qu'on veut pouvoir recevoir. Le filtre 42 est avantageusement, un filtre à ondes acoustiques de surface (SAW en terminologie anglo-saxonne).

L'amplificateur 604 effectue, sous le contrôle du circuit automatique de gain 605, l'amplification du signal fréquence intermédiaire. Le circuit automatique de gain capte le signal à la sortie de l'amplificateur 604. Une intégration sur une durée de temps suffisamment longue fournit la valeur moyenne de l'amplitude du signal pour l'élaboration d'un signal de commande de l'amplificateur 604 permettant d'optimiser la réception.

Le mélangeur 4817 effectue des battements entre un signal fourni par l'oscillateur local 491, et les signaux amplifiés par l'amplificateur 604. Le mélangeur 4817 délivre un signal sur porteuses basses. Le filtre 4818 sélectionne la partie désirée du spectre.

Le convertisseur analogique-numérique 4819 effectue l'échantillonnage numérique du signal.

Pour pouvoir obtenir des débits d'informations importants, il est primordial d'effectuer une séparation totale des signaux appartenant à divers canaux. Le circuit de réorthogonalisation 482 permet avantageusement, d'éliminer la diaphonie entre canaux. La diaphonie pourrait par exemple provenir d'échos multiples qui retardent une partie du signal. De tels signaux arrivent au récepteur notamment pendant la réception du motif suivant. Le dispositif de réorthogonalisation 482 comporte un circuit de détection de changement de motif. Par exemple, il comporte des moyens de soustraction du signal avec un signal retardé d'une durée T. Tant que les deux échantillons sont pris dans un même intervalle d'émission de durée $T + \Delta T$ leur différence est quasi constante. Cela est vrai, pour chaque intervalle d'émission pendant une durée $\Delta T$ diminuée du temps d'arrivée de l'écho multiple le plus lointain. Par contre, la fluctuation rapide de cette différence indique que les deux échantillons n'appartiennent plus au même intervalle d'émission. Ainsi de la différence de deux échantillons on détermine l'instant du changement d'intervalle d'émission et par suite une synchronisation des intervalles d'émission (appelée aussi synchronisation paquet). Le signal provenant des échos multiples risquant de provoquer une diaphonie est soit éliminé dans le cas illustré sur la figure 6a, soit rajouté de façon cohérente au motif précédent dans le cas illustré sur la figure 6c. Dans le premier cas, la durée $\Delta T$ de l'intervalle de transition est avantageusement supérieure à la durée de propagation des échos multiples que l'on veut pouvoir éliminer. L'élimination des échos multiples est effectuée par exemple en ne tenant pas compte des signaux reçus pendant les intervalles de transition 81 de durée $\Delta T$.

Dans le second cas, on prend les signaux arrivés pendant l'intervalle de transition et on les rajoute au début de l'intervalle utile d'émission correspondant. Cette dernière réalisation exige des moyens de retard permettant de stocker des motifs précédents avant leur traitement par le dispositif de démodulation 48.

Le dispositif de démodulation 48 effectue la séparation des signaux appartenant aux divers canaux. Dans l'exemple illustré sur la figure, le traitement est numérique. Par exemple, on utilise un dispositif de calcul de la Transformée de Fourier discrète. Avantageusement, on utilise un dispositif de calcul de la Transformée de Fourier rapide (FFT en terminologie anglo-saxonne). Toutefois, une séparation analogique, par exemple en utilisant des bancs de mélangeur de fréquences, séparés de 1/T, ne sort pas du cadre de la présente invention.

Les signaux démodulés sont fournis d'une part, à un circuit d'analyse 601, et d'autre part, à un dispositif d'asservissement 49.

Le circuit d'analyse 601 effectue l'analyse des signaux reçus, l'égalisation et l'étalonnage des signaux, à partir de signaux d'étalonnage ou de tests reçus de émetteur.

Le dispositif d'asservissement 49 effectue la synchronisation entre les divers étages du récepteur et entre le récepteur et l'émetteur. Il fournit notamment aux oscillateurs locaux 250 et 491, des signaux de synchronisation permettant leur fonctionnement stable dans le temps. Il fournit d'autre part une fréquence d'échantillonnage au convertisseur analogique-numérique 4819, au dispositif de réorthogonalisation 482, au dispositif de démodulation 48, au circuit d'analyse 601 et au dispositif de décision 602.

Les signaux normalisés par les circuits d'analyse 601 sont fournis au dispositif de décision 602.

Le circuit de décision 602 détermine en présence de quel point 14 de la figure 7 on se trouve et donc en présence de quel couple (amplitude, phase) ou (partie réelle du signal, partie imaginaire du signal) on se trouve. Le dispositif de décision 602 associe avantageusement, à chaque couple un mot numérique.

Le récepteur selon la présente invention comporte d'autres dispositifs comme par exemple un dispositif de traitement 45. Le dispositif de traitement 45 effectue les traitements désirés sur le signal. Par exemple, dans un récepteur de télévision le circuit de traitement 45 reconstitue l'image et le son à partir de signaux numériques. Avantageusement le dispositif de traitement 45 utilise des algorithmes de décompression d'image dans la mesure où des algorithmes de compression d âge ont été utilisés à l'émission.

Le dispositif de traitement d'information 45 est connecté au dispositif d'exploitation 46. Le dispositif d'exploitation 46 permet d'exploiter les signaux reçus. Le type de dispositif d'exploitation dépend principalement du type de récepteur qu'on utilise. Par exemple, pour la transmission de signal de télévision on va utiliser notamment un tube à rayons cathodiques ou un écran plat et un haut-parleur. Pour la transmission de données téléphoniques, le dispositif d'exploitation est par exemple un central téléphonique ou un téléphone. Pour la transmission de données le dispositif d'exploitation 46 peut être par exemple un ordinateur recevant les données à traiter ou à stocker.

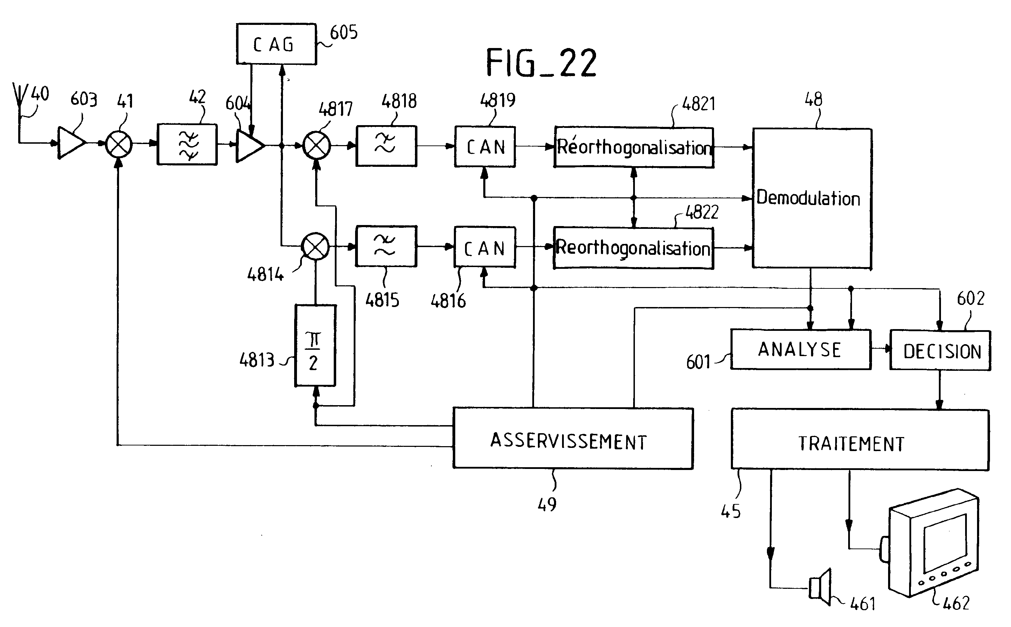

Sur la figure 22, on peut voir un exemple de réalisation du récepteur selon la présente invention comportant pour les porteuses basses une chaîne de traitement pour la partie réelle et une chaîne de traitement pour la partie imaginaire du signal en quadrature de phase.

Le dispositif de la figure 22 comporte une antenne 40, un amplificateur 603, un mélangeur 41, un filtre passe-bande 42, un amplificateur 604 à gain variable, un circuit de commande automatique de gain 605, un mélangeur 4817, un mélangeur 4814, un filtre passe-bas 4818, un filtre passe-bas 4815, un convertisseur analogique numérique 4819, un convertisseur analogique numérique 4816, un dispositif de réorthogonalisation 4821, un dispositif de réorthogonalisation 4822, un dispositif de démodulation 48, un circuit d'analyse 601, un circuit de décision 602, un dispositif de traitement d'information 45, un dispositif de visualisation 462, un dispositif de sonorisation 461, un dispositif d'asservissement 49 et un déphaseur de $\P$ /2 4813.

L'antenne 40 est reliée à l'entrée de l'amplificateur 603. La sortie de l'amplificateur 603 est reliée à une première entrée du mélangeur 41. La sortie du mélangeur 41 est reliée à un filtre passe-bande 42. La sortie du filtre passe-bande 42 est reliée à l'entrée d'un amplificateur 604. La sortie de l'amplificateur 604 est reliée à l'entrée d'un dispositif de commande automatique de gain 605, à une première entrée d'un mélangeur 4817 et à une première entrée du mélangeur 4814. La sortie du dispositif de commande automatique de gain 605 est connectée à une entrée de commande de gain d'un amplificateur 604. La sortie du mélangeur 4817 est connectée à l'entrée du filtre 4818. La sortie du mélangeur 4814 est connectée à l'entrée du filtre 4815. La sortie du filtre 4818 est connectée à l'entrée du convertisseur analogique numérique 4819. Le sortie du filtre passe-bas 4815 est connectée à l'entrée du convertisseur analogique-numérique 4816. La sortie du convertisseur analogique-numérique 4819 est connectée à l'entrée du dispositif de réorthogonalisation 4821. La sortie du convertisseur analogique-numérique 4816 est connectée à l'entrée du dispositif de réorthogonalisation 4822. Les sorties du dispositif de réorthogonalisation 4821, 4822 sont reliées aux entrées du dispositif de démodulation 48. La sortie du dispositif de démodulation 48 est connectée à entrée du circuit d'analyse 601 et du dispositif d'asservissement 49. La sortie du circuit d'analyse 601 est reliée à entrée du dispositif de décision 602. La sortie du dispositif de décision 602 est reliée à l'entrée du dispositif de traitement d'information 45. Le sortie du dispositif de traitement d'information 45 est reliée au dispositif d'exploitation comme par exemple le dispositif de visualisation 462 et dispositif de sonorisation 461. Une première sortie du dispositif d'asservissement 49 est reliée aux convertisseurs analogique-numérique 4819 et 4816, aux dispositifs de réorthogonalisation 4821 et 4822, au dispositif de démodulation 48, au circuit d'analyse 601 et au dispositif de décision 602. Cette sortie fournit la fréquence d'échantillonnage. Dans l'exemple de réalisation illustré sur la figure 9 la fréquence de battement est directement fournie par des sorties du dispositif d'asservissement 49. Une sortie haute fréquence est reliée à la seconde entrée du mélangeur 41. Une sortie moyenne fréquence est reliée à l'entrée du déphaseur de $\P$/2 4813 et à la seconde entrée du mélangeur 4817. La sortie du déphaseur 4813 est reliée à la seconde entrée du mélangeur 4814. Dans le dispositif illustré sur la figure 9 on travaille sur la partie réelle et imaginaire du signal, en quadrature de phase. Ainsi il est possible d'abaisser la fréquence, sans perdre d'information.

Le dispositif de démodulation 48 comporte avantageusement un dispositif de calcul de la Transformée de Fourier.

Avantageusement, le dispositif de calcul de la Transformée de Fourier est un dispositif de calcul de la Transformée de Fourier discrète.

Avantageusement, le dispositif de calcul de la Transformée de Fourier est un dispositif de calcul de la Transformée de Fourier rapide (FFT en terminologie anglo-saxonne). L'utilisation d'algorithme de Transformée de Fourier rapide impose d'effectuer les calculs sur un nombre d'échantillons égal à une puissance de deux. Au cours de transmissions de télévision on utilise par exemple 256,512,1024 ou 2048 canaux. Toutefois, il n'est pas nécessaire que chaque canal transmette une information. L'utilisation d'un dispositif de calcul de la Transformée de Fourier rapide pour effectuer la démodulation du signal reçu permet d'utiliser des circuits standards ou une association de circuits standards de calculs de la Transformée de Fourier rapide. Il est bien entendu que d'autres variantes de réalisation, comme par exemple la démodulation homodyne ne sortent pas du cadre de la présente invention.

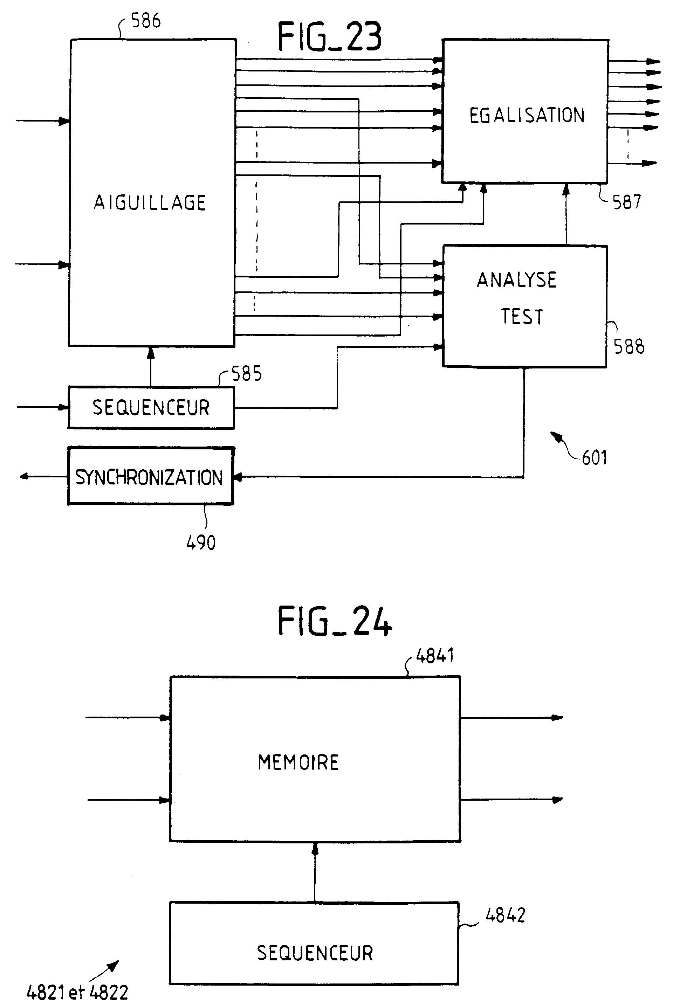

Sur la figure 23, on peut voir un exemple de réalisation du dispositif d'analyse 601. Le dispositif de la figure 23 comporte un dispositif d'aiguillage 586, dispositif d'égalisation 587, un dispositif d'analyse des signaux de test 588 et un séquenceur 585.

Le dispositif d'aiguillage 586 reçoit les signaux à traiter. Les sorties du dispositif d'aiguillage 586 sont reliées d'une part au dispositif d'égalisation 587 et d'autre part au dispositif d'analyse et de test 588. La sortie du dispositif d'analyse et de test 588 est reliée d'une part au dispositif d'égalisation 587 et d'autre part au dispositif de synchronisation 490.

Le dispositif d'aiguillage 586 sépare les signaux de test qu'il envoie vers le dispositif d'analyse et de test 588, des signaux d'informations qu'il envoie dans le dispositif d'égalisation 587. La détection des signaux de test peut être faite, par exemple, d'après une norme de transmission prédéterminée. Par exemple le dispositif d'aiguillage 586 "sait" que sur chaque intervalle de transmission un canal sur 8 est réservé aux signaux de test. Dans une autre norme de transmission, les signaux de test peuvent correspondre à tous les canaux d'un intervalle de transmission sur par exemple 100. Ces deux types de signaux de test servant à l'étalonnage de l'amplitude et/ou de la phase reçue peuvent être mixés pour donner par exemple un canal de test sur 16 tous les 64 intervalles.

Dans un premier exemple de réalisation, le récepteur selon la présente invention est conçu pour pouvoir suivre une norme unique. Dans un tel cas il est nécessaire d'effectuer une première synchronisation ou bien recevoir une synchronisation à partir d'un autre dispositif du récepteur.

Dans une seconde variante de réalisation du récepteur selon la présente invention le récepteur peut recevoir plusieurs normes de transmission. Dans ce cas il faut détecter à quelle norme de transmission appartiennent les signaux reçus. Dans la mesure où les transmissions sur des canaux séparés permettent l'émission en multiplexant plusieurs canaux et/ou par un multiplexage temporel d'envoyer des informations de natures différentes, il est possible de réserver par exemple une partie du débit d'information à des informations de service. Les informations de service peuvent par exemple contenir, périodiquement l'information concernant le type de transmission effectué.

La norme de transmission peut aussi être choisie par commutation par l'utilisateur choisissant le programme désiré. Celui-ci choisit par exemple de passer d'une émission de télévision à une émission radiophonique. Les informations sur les normes de transmission sont par exemple stockées dans une mémoire permanente (non représentée).

Le dispositif d'aiguillage 586 comporte par exemple des multiplexeurs et une logique câblée effectuant les ordres fournis par le séquenceur 585.

Les valeurs des signaux de test doivent être connues du récepteur. Par exemple, les signaux de test sont des signaux pseudo-aléatoires. Ils sont générés dans l'émetteur et le récepteur selon le même algorithme ce qui permet de comparer le signal reçu avec un signal identique au signal qui a été émis.

Le dispositif d'analyse et de test 588 détecte le niveau reçu dans chacun des canaux de test. Il détermine le déphasage et l'atténuation reçus dans les canaux de test. A partir de l'atténuation et du déphasage le dispositif d'analyse et de test 588 détermine les atténuations et les déphasages dans les canaux intermédiaires entre les canaux de test, en utilisant par exemple la méthode d'interpolation. L'interpolation peut par exemple être une interpolation linéaire.

Pour obtenir un débit d'informations important il est nécessaire de pouvoir distinguer des amplitudes et des phases proches et donc de disposer d'une référence d'amplitude et de phase pour chaque canal. Cette référence de l'amplitude et de phase est avantageusement donnée par des signaux de référence émis périodiquement par l'émetteur vers le récepteur. La fréquence de répétition de signaux de référence dépend de la stabilité des conditions de propagation et des oscillateurs locaux.

Dans une première variante de réalisation du dispositif selon la présente invention, on émet périodiquement des signaux de référence d'amplitude et de phase sur toutes les fréquences 31 à 3N d'un intervalle de temps de durée T ou T + $\Delta$T. Toutefois, il est nécessaire de noter que l'émission fréquente de signaux d'étalonnage réduit le débit d'informations utiles transmises.

Dans une variante avantageuse du dispositif selon la présente invention on n'émet que quelques signaux d'étalonnage avantageusement répartis régulièrement parmi les fréquences 31 à 3 N, les coefficients des autres fréquences étant déterminés par le calcul, par exemple par interpolation.

D'une façon plus générale, il est possible de distribuer les signaux d'étalonnage dans le temps et/ou sur des canaux différents.

Il est par exemple possible d'émettre de façon périodique des signaux de test, chaque émission se faisant sur des canaux différents. On effectue, par exemple une permutation circulaire des canaux affectés aux tests. On déduit pour tous les canaux par exemple par interpolation dans le temps et/ou sur les fréquences la réponse impulsionnelle du milieu de transmission. On déduit ainsi la matrice des corrections en amplitude et en phase à appliquer à chaque canal.

Il est primordial de compenser par des étalonnages les variations de la réponse impulsionnelle du milieu de transmission, par exemple par suite d'une variation (même locale) des conditions atmosphériques.

On détermine la réponse impulsionnelle du milieu, par exemple en calculant la Transformée de Fourier des corrections à apporter.

Dans un exemple de réalisation un canal sur 8 servait à l'étalonnage de l'amplitude A et de la phase de tous les canaux 31 à 3N. Dans un tel type de dispositif il est possible, soit d'effectuer l'étalonnage à chaque intervalle utile d'émission de durée T, soit comme dans le cas d'une réalisation décrite précédemment de consacrer uniquement certains intervalles d'émission à l'étalonnage. La synchronisation est maintenue par l'utilisation d'une base de temps stable.

Le dispositif d'analyse et de test comporte par exemple le dispositif de mémorisation et des microprocesseurs de traitement du signal rapide. Les valeurs de déphasage et des atténuations pour chaque canal sont transmises au dispositif d'égalisation 587.

Le dispositif d'égalisation 587 applique à chaque canal une amplification et un déphasage inverses de ceux induits par la transmission. Ainsi, les amplitudes de tous les canaux à la réception après égalisation par le circuit 587 sont proportionnelles aux amplitudes lors de l'émission. De même, le déphasage relatif entre canaux à la réception, après le traitement par le dispositif d'égalisation 587 est égal au déphasage relatif entre les canaux à l'émission.

Dans une variante de réalisation analogique le dispositif d'égalisation 587 comporte des déphaseurs variables et des amplificateurs variables. Les déphaseurs analogiques peuvent avoir une commande numérique, on peut par exemple utiliser des dispositifs à transfert de charge (CCD en terminologie anglo-saxonne) comportant une entrée unique et une pluralité de sortie. Chaque sortie correspond à un déphasage différent.

Dans une variante numérique de réalisation du dispositif d'égalisation 587 on utilise des multiplications et des additions pour effectuer des corrections d'amplitude et de phase. On utilise des logiques câbles et/ou des logiques microprogrammées ou programmées.

Sur la figure 24, on peut voir une architecture de type connu susceptible d'être mise en oeuvre dans le dispositif selon la présente invention. L'architecture de la figure 24 est susceptible d'être utilisée dans le dispositif de réorthogonalisation. Le dispositif de mémorisation 4841 est par exemple un dispositif à double port. Les données à stocker arrivent par le port d'entrée. Ces données réarrangées repartent à partir du port de sortie. Le séquenceur 4842 fournit les adresses de l'inscription et de relecture des données. Selon le type de réorganisation de données désiré il est possible de relire des mots entiers ou seulement des parties de mots ou des bits individuels. Le dispositif de mémorisation 4841 comporte par exemple des circuits intégrés de mémoire vive (RAM en terminologie anglo-saxonne).

Le séquenceur 4842 comporte par exemple une logique câblée et des compteurs. Dans une variante de réalisation, pour utiliser des circuits standards il est possible de remplacer le séquenceur 4842, par exemple par un microprocesseur. Avantageusement, le microprocesseur est du type traitement du signal.

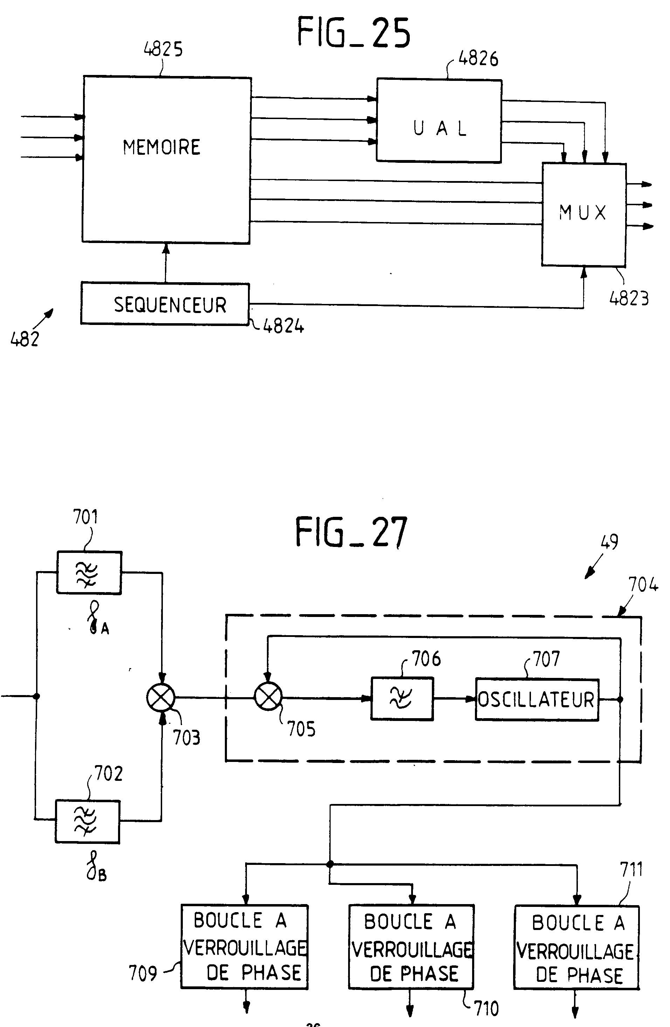

Sur la figure 25, on peut voir un second exemple de réalisation d'un dispositif de réorthogonalisation. Dans l'exemple de réalisation illustré sur la figure 25, le dispositif 482 comporte un dispositif de mémorisation 4825, une unité arithmétique et logique 4826, un multiplexeur 4823 ainsi qu'un séquenceur 4824. La sortie du dispositif de mémorisation 4825 est connecté à l'entrée de l'unité arithmétique et logique 4826 et à une première entrée du multiplexeur 4823. La sortie de l'unité arithmétique et logique 4825 est reliée à une seconde entrée du multiplexeur 4823. Le séquenceur 4824 reçoit les signaux généraux de synchronisation du récepteur par exemple à partir d'un dispositif d'asservissement 49. Le séquenceur 4824 envoie des signaux de commande et de synchronisation au multiplexeur 4823. Le séquenceur 4824 envoie des signaux d'adresse et de synchronisation au dispositif de mémorisation 4825. Dans le dispositif illustré sur la figure 25 l'adressage de la mémoire 4825 par le séquenceur 4824 permet d'effectuer le réarrangement des mots numériques. L'unité arithmétique et logique se charge d'effectuer les sommations désirées des signaux. La commutation du multiplexeur 4823 permet de choisir entre les deux modes de réarrangement selon la norme de transmission désirée et la phase de réception en cours.

D'autre part il est possible d'utiliser pour exploiter le signal d'utiliser un démodulateur amplitude/phase tel que celui illustré sur la figure 22 du Brevet FR 86 13937 déposé le 7 Octobre 1986 par la Demanderesse.

L'émetteur selon la présente invention envoie des signaux de codage permettant à la réception la synchronisation précise d'une base de temps du récepteur avec une base de temps de l'émetteur. Ainsi il est possible d'avoir une bonne résolution temporelle et/ou de phase.

Dans un premier exemple de réalisation du dispositif selon la présente invention, on utilise une synchronisation numérique.

Dans un exemple de réalisation illustré sur la figure 27, on utilise une synchronisation analogique.

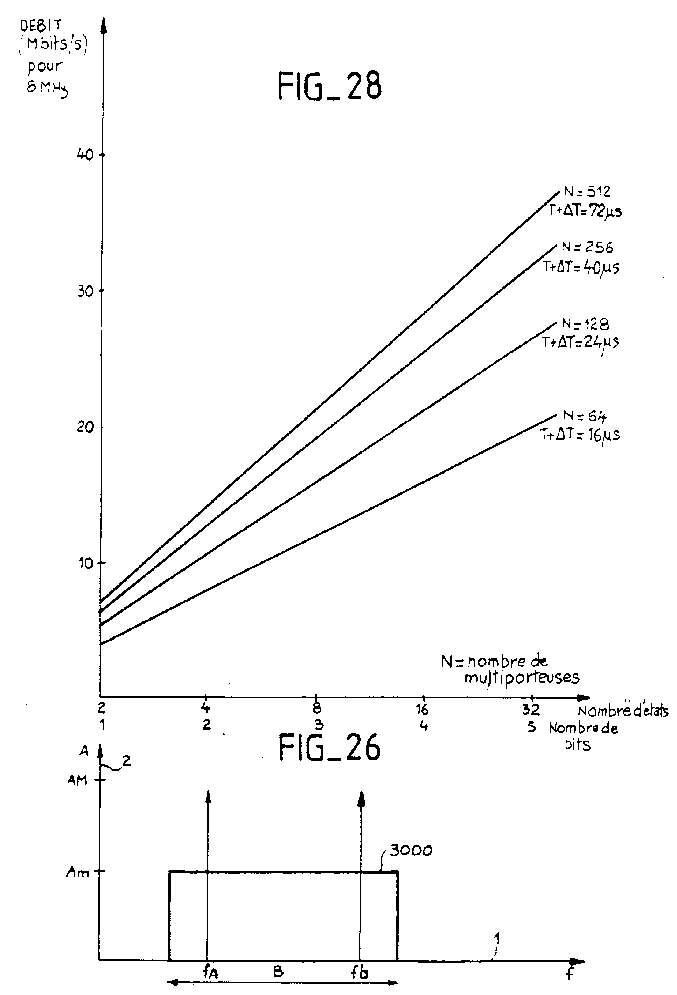

Dans l'exemple illustré sur la figure 26, on émet un ensemble 3000 de signaux modulés sur N canaux.

Le spectre est sensiblement rectangulaire ayant une largeur en fréquence f 1 égal à B, la bande passante et une hauteur Am correspondant à l'amplitude A 2 moyenne du signal. A l'intérieur de la bande B, on émet deux fréquences $f_A$ et $f_B$ avec une amplitude AM nettement supérieure à Am. Par exemple AM est supérieur de 12 dB à Am. Ainsi à la réception, en connaissant les fréquences $f_A$ et $f_B$, on va pouvoir séparer $f_A$ et $f_B$. Par la connaissance de fréquence $f_A$ et $f_B$ d'une part et de leur différence à la réception d'autre part, on obtient une référence de la fréquence d'où on peut déduire une référence de temps. A la réception, la différence $f_A - f_B$ est obtenue, par exemple, en faisant battre les fréquences $f_A$ et $f_B$ dans un mélangeur.

Dans un exemple de réalisation du dispositif selon la présente invention, B est égal à 8 MHz et $f_A$ est distant

16

de $f_B$ de 5 MHz.

Sur la figure 14 est montré un exemple de réalisation analogique du dispositif d'asservissement 49 des figures 8 et 9. Le dispositif de la figure 14 est destiné à fonctionner avec un signal émis par l'émetteur tel qu'illustré sur la figure 13. Le dispositif d'asservissement 49 comporte un filtre passe-bande 701 et un filtre passe-bande 702, un mélangeur 703, une boucle à verrouillage de phase 704 (PLL en terminologie anglo-saxonne), une boucle à verrouillage de phase à division de fréquence 709 (PLL), une boucle à verrouillage de phase à division de fréquence 710 (PLL) et une boucle à verrouillage de phase à division de fréquence 711 (PLL). Les boucles à verrouillage de phase comportent par exemple un mélangeur, un filtre passe-bas, un oscillateur commandé par une tension. Sur la figure 27, la boucle 704 comporte un mélangeur 705, un filtre passe-bas 706, un oscillateur commandé par une tension 707 (VCO en terminologie anglo-saxonne).

L'entrée du dispositif 49 est connectée aux entrées des filtres 701 et 702. La sortie du filtre 701 est connectée à une première entrée du mélangeur 703. La sortie du filtre 702 est connectée à une seconde entrée du mélangeur 703. La sortie du mélangeur 703 est connectée à une première entrée du mélangeur 705. La sortie du mélangeur 705 est reliée à l'entrée du filtre passe-bas 706. La sortie de oscillateur 707 est reliée à l'entrée de la boucle de verrouillage de phase 709, à l'entrée de la boucle de verrouillage de phase 710 à l'entrée de la boucle de verrouillage de phase 711. La sortie du filtre passe-bas 706 est connectée à l'entrée de l'oscillateur 707. La sortie de l'oscillateur 707 est connectée à la seconde entrée du mélangeur 705. Les sorties des boucles de verrouillage de phase 709, 710 et 711 constitue les sorties du dispositif d'asservissement 49 fournissant les fréquences désirées.

Le filtre 701 sélectionne la fréquence $f_A$, le filtre 702 sélectionne la fréquence $f_B$. Le mélangeur 703 effectue le battement entre la fréquence $f_A$ et $f_B$.

La boucle à verrouillage de phase 704 fournit la valeur des différences entre fréquences $f_A$ et $f_B$. La différence entre les fréquences $f_B$, $f_A$ à l'émission déterminée par le standard d'émission est connue. La comparaison à la réception permet de fournir une référence de fréquence et de phase.

Les boucles à verrouillage de phase 709, 710 et 711 permettent de fournir des références de fréquence et de phase suffisamment stables pour le fonctionnement du dispositif selon la présente invention. Par exemple, la boucle 709,710,711 permet de fournir une référence de fréquence respectivement à l'oscillateur local 250 et à l'oscillateur local 491 de la figure 21 et un signal d'horloge d'échantillonnage aux dispositifs numériques des figures 8 ou 9. Les fréquences d'oscillation dépendent des réglages des oscillateurs.

L'invention s'applique aux dispositifs de réception d'informations analogiques et/ou numériques, aux communications entre ordinateurs, aux communications téléphoniques entre centraux, aux communications téléphoniques entre radiotéléphones et stations de communications, aux communications radioélectriques entre stations terrestres et satellites, aux communications entre satellites, aux communications acoustiques dans l'air et/ou dans l'eau, à la réalisation de réseaux locaux d'ordinateurs et à la réception d'émissions radiophoniques et de télévision.

La présente invention concerne un nouveau type de modulation pouvant s'appliquer à toutes transmissions ou acquisitions d'informations. Elle s'applique au dispositif utilisant tous types d'ondes, notamment des ondes acoustiques, et plus particulièrement des ondes électromagnétiques.

Le dispositif selon la présente invention s'applique notamment aux émissions radiophoniques et de télévision, aux dispositifs de transmissions d'informations analogiques ou numériques, aux communications entre ordinateurs, aux communications téléphoniques entre centraux, aux communications téléphoniques entre radiotéléphones et stations de communications, aux communications radioélectriques entre stations terrestres et satellites, aux communications entre deux satellites, aux communications acoustiques dans l'air et/ou dans l'eau, à la réalisation de réseaux locaux d'ordinateurs, aux sonars, aux radars.

L'invention est particulièrement bien adaptée aux émissions et à la réception radiophoniques haute fidélité ainsi qu'à la télévision à haute définition (HDTV en terminologie anglo-saxonne), et/ou à la télévision numérique.

## Revendications

1. Procédé d'émission d'ondes modulées à haute efficacité spectrale utilisant simultanément une pluralité de fréquences orthogonales dans lequel on émet des symboles pendant une durée $T + \Delta T$, deux fréquences d'émission étant distantes de $1/T$, $T$ étant l'intervalle utile d'émission et $\Delta T$ étant l'intervalle de transition, absorbant les non-stationarités dues à l'arrivée des différents échos, dans lequel durant chaque intervalle d'émission de durée $T + \Delta T$, on émet un couple (amplitude, phase) ou (partie réelle, partie imaginaire) sur chaque fréquence, le couple (amplitude, phase) ou (partie réelle, partie imaginaire) étant équivalent de façon bi-univoque à l'information à transmettre, caractérisé en ce que le nombre de couples

17

possible est supérieur à 4, en ce que les symboles émis sont constitués périodiquement par des signaux de référence permettant à la réception d'égaliser le canal de transmission et en ce que l'on émet des signaux de synchronisation permettant à la réception le traitement du signal pendant les intervalles utiles d'émission de durée T de façon à retrouver l'orthogonalité des canaux correspondant aux diverses fréquences.

2. Procédé selon la revendication 1, caractérisé par le fait que le rapport $\frac{\Delta T}{T}$ est inférieur ou égal à 1/8.

3. Procédé selon la revendication 1 ou 2, caractérisé par le fait que la première fréquence utilisée fo est égale à k/T, k étant un entier positif ou nul.

4. Procédé selon l'une quelconque des revendications 1 à 3, caractérisé par le fait qu'il comporte une étape :
   - de détermination des motifs pour l'intervalle utile d'émission de durée T,
   - d'émission du motif pendant un intervalle d'émission de durée T et sa continuation cohérente par recopie de la fin de l'invervalle utile du signal numérique durant l'intervalle de transition de durée $\Delta T$.

5. Procédé selon l'une quelconque des revendications 1 à 3, caractérisé par le fait que pendant les intervalles de transition on arrête l'émission.

6. Procédé selon l'une quelconque des revendications 1 à 5, caractérisé par le fait que durant chaque intervalle utile d'émission de durée T, on émet un symbole sur toute ou partie des fréquences.

7. Emetteur pour la mise en oeuvre du procédé selon l'une quelconque des revendications 1 à 6, caractérisé par le fait qu'il comporte un dispositif de modulation (90) permettant d'émettre, durant un intervalle utile d'émission de durées T + $\Delta T$, pour chaque fréquence utilisée, les fréquences étant choisies parmi une pluralité de fréquences orthogonales, deux fréquences étant distantes de 1/T, soit un symbole choisi parmi un nombre de couples amplitudes, phase important, soit un signal de référence permettant d'assurer l'égalisation du canal de transmission.

8. Emetteur selon la revendication 7, caractérisé par le fait que le dispositif de modulation (90) comporte un dispositif (190) de calcul de la Transformée de Fourier inverse numérique pour plus de 1024 échantillons impliquant un temps de traitement $\leqq 100\mu s$.

9. Emetteur selon l'une quelconque des revendications 7 et 8, caractérisé par le fait que l'un des canaux de transmission est centré sur la porteuse de fréquence nulle.

10. Emetteur selon l'une quelconque des revendications 7 et 8, caractérisé par le fait que le dispositif de modulation (90) travaille en fréquence intermédiaire.

11. Emetteur selon l'une quelconque des revendications 7 et 8, caractérisé par le fait que le dispositif de modulation (90) est un dispositif numérique de modulation sur porteuse.

12. Récepteur pour la réception des ondes émises à haute efficacité spectrale avec le procédé selon les revendications 1 à 6, comportant des moyens de transposition et d'échantillonnage synchrones avec le signal, caractérisé par le fait qu'il comporte des moyens de démodulation d'une émission d'ondes modulées utilisant des symboles émis pendant une durée T + $\Delta T$ sur une pluralité de fréquences orthogonales, deux fréquences d'émission étant distantes de 1/T, T étant l'intervalle utile d'émission et $\Delta T$ étant l'intervalle de transition et qu'il comporte un dispositif d'asservissement (49) assurant la synchronisation du récepteur avec le signal reçu utilisant l'intervalle de transition $\Delta T$ et en ce qu'il comporte des moyens de test utilisant les signaux de référence en vue de réaliser une égalisation du canal.

13. Récepteur selon la revendication 12, caractérisé par le fait qu'il comporte un dispositif de contrôle automatique de gain (CAG) commandé par un dispositif de détection de la puissance moyenne d'au moins une partie du signal.

14. Récepteur selon l'une quelconque des revendications 12 à 13, caractérisé par le fait qu'il comporte au moins un dispositif (483) de calcul de la Transformée de Fourier rapide (FFT) pour plus de 1024 échantillons impliquant un temps de traitement $\leqq 100\mu s$.

**15.** Récepteur selon l'une quelconque des revendications 12 ou 14, caractérisé par le fait qu'il comporte des moyens de décodage (45) de couple (amplitude, phase) ou (partie réelle, partie imaginaire) pour les convertir en des mots numériques.

**16.** Récepteur selon la revendication 12, caractérisé par le fait que les moyens de test comportent un dispositif (587) d'égalisation compensant les perturbations du signal provenant de la transmission et notamment les multi-trajets dûs aux différents échos.

**17.** Récepteur selon l'une quelconque des revendications 12 à 16, caractérisé par le fait qu'il comporte des moyens de réorthogonalisatlon (482,4821,4822) utilisant l'intervalle de transition $\Delta T$ pour rendre orthogonaux une pluralité de canaux.

**18.** Récepteur selon la revendication 17, caractérisé en ce que les moyens de réorthogonalisation comportent un circuit de détection de changement de motif.

**19.** Récepteur selon la revendication 18, caractérisé en ce que le circuit de détection de changement de motif comporte des moyens de soustraction du signal avec un signal retardé d'une durée T et des moyens pour déterminer si la différence est quasi constante ou non.

## Patentansprüche

**1.** Verfahren zum Aussenden von modulierten Wellen mit hohem Spektralwirkungsgrad, demgemäß gleichzeitig mehrere orthogonale Frequenzen benutzt werden und Symbole während einer Dauer T + $\Delta T$ ausgesendet werden, wobei zwei Sendefrequenzen einen Abstand von 1/T besitzen und T das Sende-Nutzintervall sowie $\Delta T$ das Übergangsintervall ist, wobei weiter die nicht stationären Erscheinungen aufgrund des Eintreffens verschiedener Echos absorbiert werden, wobei während jedes Sendeintervalls der Dauer T + $\Delta T$ auf jeder Frequenz ein Informationspaar (Amplitude, Phase oder reeller und imaginärer Teil) ausgesendet wird und das Paar Amplitude-Phase oder reeller - imaginärer Teil in ein-eindeutiger Weise der zu übertragenden Information entspricht, dadurch gekennzeichnet, daß die Anzahl der möglichen Paare größer als 4 ist, daß die ausgesendeten Symbole periodisch aus Bezugssignalen gebildet werden, die beim Empfang den Übertragungskanal zu entzerren erlauben, und daß Synchronisationssignale ausgesendet werden, die beim Empfang die Verarbeitung des Signals während der Sende-Nutz-Intervalle der Dauer T erlauben, so daß die orthogonale Lage der den verschiedenen Frequenzen entsprechenden Kanäle wiedergefunden wird.

**2.** Verfahren nach Anspruch 1, dadurch gekennzeichnet, daß das Verhältnis $\Delta T/T \leq 1/8$ ist.

**3.** Verfahren nach Anspruch 1 oder 2, dadurch gekennzeichnet, daß die erste verwendete Frequenz fo dem Wert k/T gleicht, wobei k eine positive ganze Zahl oder Null ist.

**4.** Verfahren nach einem beliebigen der Ansprüche 1 bis 3, dadurch gekennzeichnet, daß es enthält:
- einen Verfahrensschritt der Bestimmung der Motive für das Nutz-Sende-Intervall der Dauer T,
- einen Verfahrensschritt der Aussendung des Motivs während eines Sendeintervalls der Dauer T und der kohärenten Signalfortsetzung mittels einer Kopie des Endes des Nutzintervalls des Datensignals während des Übergangsintervalls der Dauer $\Delta T$.

**5.** Verfahren nach einem beliebigen der Ansprüche 1 bis 3, dadurch gekennzeichnet, daß während der Übergangsintervalle die Sendung unterbrochen wird.

**6.** Verfahren nach einem beliebigen der Ansprüche 1 bis 5, dadurch gekennzeichnet, daß während jedes Nutz-Sende-Intervalls T ein Symbol auf jeder Frequenz oder einem Teil der Frequenzen ausgesendet wird.

**7.** Sender zur Durchführung des Verfahrens nach einem beliebigen der Ansprüche 1 bis 6, dadurch gekennzeichnet, daß er eine Modulationsvorrichtung (90) aufweist, die während eines Nutz-Sende-Intervalls einer Dauer T + $\Delta T$ für jede verwendete Frequenz entweder ein Symbol aus einer großen Zahl von Amplituden-Phasenpaaren oder ein Bezugssignal aussenden kann, das die Entzerrung des Übertragungskanals bewirken kann, wobei die Frequenzen unter einer Vielzahl von orthogonalen Frequenzen ausgewählt werden und zwei Frequenzen einen Abstand von 1/T besitzen.

8. Sender nach Anspruch 7, dadurch gekennzeichnet, daß die Modulationsvorrichtung (90) eine Vorrichtung (190) zur Berechnung der digitalen inversen Fouriertransformierten für mehr als 1024 Tastproben aufweist, was zu einer Verarbeitungszeit von höchstens 100 µs führt.

9. Sender nach einem beliebigen der Ansprüche 7 und 8, dadurch gekennzeichnet, daß einer der Übertragungskanäle auf den Träger mit der Frequenz Null zentriert ist.

10. Sender nach einem beliebigen der Ansprüche 7 und 8, dadurch gekennzeichnet, daß die Modulationsvorrichtung (90) im Zwischenfrequenzbereich arbeitet.

11. Sender nach einem beliebigen der Ansprüche 7 und 8, dadurch gekennzeichnet, daß die Modulationsvorrichtung (90) eine Vorrichtung zur digitalen Modulation eines Trägers ist.

12. Empfänger zum Empfang der mit dem Verfahren gemäß den Ansprüchen 1 bis 6 ausgesendeten Wellen mit hohem spektralem Wirkungsgrad, mit Umsetzungs- und Tastungsmittel, die mit dem Signal synchron sind, dadurch gekennzeichnet, daß der Empfänger Mittel zur Demodulation der ausgesendeten modulierten Wellen besitzt, die während einer Dauer T + $\Delta$T auf einer Mehrzahl von orthogonalen Frequenzen ausgesendete Symbole verwenden, wobei zwei Sendefrequenzen einen gegenseitigen Abstand von 1/T besitzen und T das Nutz-Sende-Intervall sowie $\Delta$T das Übergangsintervall bedeutet, daß eine Regelvorrichtung (49) vorgesehen ist, die den Empfänger mit dem Empfangssignal unter Benutzung des Übergangsintervalls $\Delta$T synchronisiert, und daß Testmittel vorgesehen sind, die die Bezugssignale verwenden, um den Kanal zu entzerren.

13. Empfänger nach Anspruch 12, dadurch gekennzeichnet, daß er eine automatische Verstärkungsregelvorrichtung (CAG) besitzt, die von einer Vorrichtung zur Erfassung der mittleren Leistung mindestens eines Teils des Signals gesteuert wird.

14. Empfänger nach einem beliebigen der Ansprüche 12 und 13, dadurch gekennzeichnet, daß er mindestens eine Vorrichtung (483) zur schnellen Berechnung der Fouriertransformierten für mehr als 1024 Tastproben enthält, was zu einer Verarbeitungszeit von höchstens 100 µs führt.

15. Empfänger nach einem beliebigen der Ansprüche 12 oder 14, dadurch gekennzeichnet, daß er Mittel (45) zur Dekodierung des Signalpaars (Amplitude-Phase oder reeller - imaginärer Teil) besitzt, die die Umwandlung in digitale Wörter bewirken.

16. Empfänger nach Anspruch 12, dadurch gekennzeichnet, daß die Testmittel eine Entzerrungsvorrichtung (587) enthalten, die die Störungen des Signals kompensieren, die von der Übertragungsstrecke und insbesondere von Mehrfachpfaden aufgrund verschiedener Echos stammen.

17. Empfänger nach einem beliebigen der Ansprüche 12 bis 16, dadurch gekennzeichnet, daß er Orthogonalisierungsmittel (482, 4821, 4822) aufweist, die das Übergangsintervall $\Delta$T verwenden, um eine Mehrzahl von Kanälen orthogonal zu machen.

18. Empfänger nach Anspruch 17, dadurch gekennzeichnet, daß die Orthogonalisierungsmittel einen Detektor zur Erfassung eines Motivwechsels enthalten.

19. Empfänger nach Anspruch 18, dadurch gekennzeichnet, daß der Detektor zur Erfassung eines Motivwechsels Mittel, um das Signal von einem um eine Dauer T verzögerten Signal abzuziehen, und Mittel aufweist, um zu bestimmen, ob die Differenz angenähert konstant oder nicht konstant ist.

## Claims

1. A method for transmitting modulated waves at high spectral efficiency, the method using simultaneously a plurality of orthogonal frequencies, wherein symbols are transmitted during a period T + $\Delta$T, two transmission frequencies having a distance of 1/T, T being the useful transmission interval and $\Delta$T being the transition interval, the method including the absorption of non-stationary phenomena due to the arrival of different echoes, wherein during each transmission interval of direction T + $\Delta$T a pair (amplitude-phase or real part - imaginary part) is transmitted on each frequency, the pair (amplitude-phase or real part - imaginary part) being bi-uniformly correspondent to the information to be transmitted, characterized in that the number of possible pairs exceeds the number 4, that the transmitted symbols consist periodically of reference signals allowing to equalize the transmission channel at the reception side, and that synchronisation signals are transmitted which make it possible to process the signal at the reception side during the useful transmission intervals of duration T in order to re-install the orthogonality of the channels corresponding to the different frequencies.

2.  A method according to claim 1, characterized in that the ratio $\Delta T/T$ is at most 1/8.

3.  A method according to claim 1 or 2, characterized in that the first used frequency fo is equal to k/T, k being a positive integer or zero.

4.  A method according to any one of claims 1 to 3, characterized in that it includes
    - a step of determining the symbols for the useful transmission interval of duration T,
    - a step of transmitting the symbols during a transmission interval of duration T and of coherent continuation by copying the end of the useful interval of the digital signal during the transition interval of duration $\Delta T$.

5.  A method according to any one of claims 1 to 3, characterized in that during the transition intervals the transmission is interrupted.

6.  A method according to any one of claims 1 to 5, characterized in that during each useful transmission interval of duration T, a symbol is transmitted on any frequency or a part of these frequencies.

7.  A transmitter for implementing the method according to any one of claims 1 to 6, characterized in that it comprises a modulation device (90) allowing to transmit either a symbol selected out of an important number of amplitude-phase pairs, or a reference signal allowing to equalize the transmission channel, during a useful transmission interval of duration $T + \Delta T$ for each frequency used, the frequencies being selected among a plurality of orthogonal frequencies, two frequencies having a distance of 1/T.

8.  A transmitter according to claim 7, characterized in that the modulation device (90) includes a device (190) for calculating the digital inverse Fourier transform for more than 1024 samples which implies a processing time of $\leqq 100\ \mu$s.

9.  A transmitter according to any one of claims 7 to 8, characterized in that one of the transmission channels is centred to the zero frequency carrier wave.

10. A transmitter according to any one of claims 7 and 8, characterized in that the modulation device (90) operates at intermediate frequency.

11. A transmitter according to any one of claims 7 and 8, characterized in that the modulation device (90) is a device for digitally modulating a carrier wave.

12. A receiver intended to receive waves which have been transmitted at high spectral efficiency according to the method of claims 1 to 6, comprising frequency transposition means and sampling means which are synchronous with the signal, characterized in that it comprises means for demodulating transmitted modulated waves using symbols which are transmitted during a time interval of $T + \Delta T$ on a plurality of orthogonal frequencies, two transmission frequencies having a distance of 1/T and T being the useful transmission interval whereas $\Delta T$ is the transition interval, and in that it comprises a feedback control device (49) ensuring synchronisation of the receiver with the received signal by using the transition interval $\Delta T$, and in that it comprises test means using the reference signals in view of an equalization of the channel.

13. A receiver according to claim 12, characterized in that it comprises an automatic gain control device (CAG), controlled by a device for detecting the mean power of at least a portion of the signal.

14. A receiver according to any one of claims 12 and 13, characterized in that it comprises at least a device (483) for calculating the Fast Fourier Transform (FFT) for more than 1024 samples, which implies a processing time of $\leqq 100\ \mu$s.

**15.** A receiver according to any one of claims 12 or 14, characterized in that it comprises means (45) for decoding the pair (amplitude-phase or real part - imaginary part) in order to convert it into digital words.

**16.** A receiver according to claim 12, characterized in that the test means include an equalizer device (587) which equalizes the signal distortions caused by the transmission and especially the multipath distortions due to different echoes.

**17.** A receiver according to any one of claims 12 to 16, characterized in that it comprises orthogonalization means (482, 4821, 4822) which use the transition interval $\Delta T$ for rendering orthogonal a plurality of channels.

**18.** A receiver according to claim 17, characterized in that the orthogonalization means include a circuit for detecting symbol changes.

**19.** A receiver according to claim 18, characterized in that the circuit for detecting the symbol changes comprises means for subtracting the signal from a signal which has been delayed by a time T, and means for determining if the difference is approximately constant or not.

## FIG_1

## FIG_2-a

## FIG_2-b

## FIG_3

FIG_4

FIG_5

EP 0 365 431 B1

FIG_6-a

FIG_6-b

FIG_6-c

FIG_7

# FIG_8

SOURCES
73

TRAITEMENT
700

CODAGE
70

MODULATION
90

77

40

400

# FIG_10

71

72

73
SOURCE

TRAITEMENT
700

MISE EN FORME
74

CONVERSION NUMERIQUE SIGNAUX COMPLEXES
75

70

MODULATEUR
91

MODULATEUR
92

MODULATEUR
9N

76

760

M

90

40

400

77

26

# FIG_9

SOURCE 73

SOURCE 73

SOURCE 73

TRAITEMENT 700

CODAGE 70

MODULATION 90

77

77

77

77

Σ 76

40

EP 0 365 431 B1

FIG_11

MISE EN FORME — 74

CONVERSION — 75

78

FFT$^{-1}$ — 190

SERIALISATION — 301

700 — TRAITEMENT

71

72

SOURCES — 73

GENERATEUR DE SIGNAL — 302

77

40

FIG_12

TABLEAU — 750

TABLEAU — 750

75

## FIG_13

## FIG_14

## FIG_15

3211 FILTRE 3201 3022 3203

CNA ⊗ ≈≈ Σ →

3209

CNA ⊗ ≈≈

3212 3210 3206

π/2 3208

302

## FIG_16

7811

MEMOIRE VIVE

7812

MEMOIRE VIVE

7813

MEMOIRE VIVE

SEQUENCEUR

784

MEMOIRE VIVE

7814

## FIG_17

7811

MEMOIRE VIVE

MEMOIRE VIVE

781

7812

SEQUENCEUR ADM

784

FIG_18

FIG_19

FIG_20

FIG_21

FIG_22

## FIG_23

586

AIGUILLAGE

EGALISATION

587

ANALYSE
TEST

588

585

SEQUENCEUR

601

SYNCHRONIZATION

490

## FIG_24

4841

MEMOIRE

4842

SEQUENCEUR

4821 et 4822

# FIG_25

# FIG_27

DEBIT
(Mbits/s)
pour
8 MHz

## FIG_28

40

30

20

10

N = 512
T+ΔT=72µs

N = 256
T+ΔT=40µs

N = 128
T+ΔT=24µs

N = 64
T+ΔT=16µs

N=nombre de
multiporteuses

| 2 | 4 | 8 | 16 | 32 | Nombre d'états |
| 1 | 2 | 3 | 4 | 5 | Nombre de bits |

## FIG_26

A

AM — 2

Am — 3000

1

fA    B    fb    f